(19) Europäisches Patentamt

European Patent Office

Office européen des brevets

(11) **EP 1 316 906 A1**

(12) **EUROPEAN PATENT APPLICATION**

(43) Date of publication:
04.06.2003 Bulletin 2003/23

(51) Int Cl.$^7$: **G06F 17/60**

(21) Application number: 02026692.0

(22) Date of filing: 29.11.2002

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: 03.12.2001 JP 2001369083

(71) Applicant: **Hitachi, Ltd.**
**Chiyoda-ku, Tokyo 101-8010 (JP)**

(72) Inventors:
• **Sakui, Hiroshi, Hitachi, Ltd.**
**Tokyo 100-8220 (JP)**

• **Yagi, Hiroyuki, Hitachi, Ltd.**
**Tokyo 100-8220 (JP)**
• **Ichihari, Genichiro, Hitachi, Ltd.**
**Tokyo 100-8220 (JP)**
• **Ikeda, Yuichi, Hitachi, Ltd.**
**Tokyo 100-8220 (JP)**

(74) Representative: **Strehl Schübel-Hopf & Partner
Maximilianstrasse 54
80538 München (DE)**

(54) **Business performance index processing system**

(57)     A computer is used to perform the calculations for obtaining: a capital composition corresponding to a predetermined default probability based on a probability distribution of a return on investment; a weighted average cost of capital based on the capital composition, a borrowing cost, and an equity cost; and a market efficiency value added from the weighted average cost of capital and a net operating profit after tax. The market efficiency value added obtained through these calculations is then displayed appropriately so as to provide support in decision-making.

This provides support in decision-making for determining investment or with drawal for each business unit to concentrate on specific areas of businesses, ensuring optimum business operations, and thereby allowing an enterprise to maintain a sustainable growth in harmony with the society.

*FIG. 1*

EP 1 316 906 A1

**Description**

Cross-reference to Related Applications

Patent Application Serial No. 10/227,796

Background of the Invention

The present invention relates to a business performance index processing system. More particularly, it relates to displaying, through calculations performed by a computer for business performance-related indices and based on the results of these calculations, an item related to measurement of performance of an entire enterprise or business units the enterprise has therein, or a new business to be started.

In recent years, the business circumstances surrounding enterprises have become more and more severe and it has become important to even more properly evaluate each business of an enterprise and to appropriately evaluate the future of a new business planned so as to meet the requirement of both the stockholders (investors) and creditors.

Various performance measurement methods are currently examined and applied to making a business performance evaluation. Nonetheless even more appropriate displaying method is desired.

Summary of the Invention

An object of the present invention is to provide a business performance index processing system that performs calculations through an appropriate method for obtaining market efficiency value added (MEVA) that can be used as an index for evaluation of business performance and displays the results of the calculations.

Another object of the present invention is to provide a system capable of displaying appropriately a business value in a format that helps make a decision in terms of management of an enterprise.

Other objects of the present invention will be described in the preferred embodiments of the invention to be described later.

To achieve the foregoing objects, the business performance index processing system according to the preferred embodiments of the present invention performs calculations for obtaining the following three parameters based on a probability distribution of the ratio of the value of profit to the investment amount (ROI). The three parameters are: a capital composition (debt/equity ratio) that satisfies a predetermined default probability; a weighted average cost of capital based on the capital composition, and a borrowing cost and an equity cost; and, market efficiency value added, or MEVA, from the weighted average cost of capital based on a net operating profit after tax. Based on the results of these calculations, it thereby produces an output of an appropriate form, and gives a display, of indices that serve as the basis for making a managerial decision.

The invention is characterized in a number of aspects to be described in the preferred embodiments of the invention to be described later.

Brief Description of the Drawings

Other objects and advantages of the invention will become apparent from the following description of embodiments with reference to the accompanying drawings in which:

Fig. 1 is a system flowchart showing a business performance index processing system according to an embodiment of the present invention;
Fig. 2 is a diagram showing each combination of a rating, a default probability, and a borrowing cost;
Fig. 3 is a diagram used for calculating an equity risk D;
Fig. 4 is a diagram used for calculating an equity cost (Re);
Fig. 5 is a diagram showing a business risk (ROI distribution);
Fig. 6 is a diagram showing a typical screen displaying a MEVA value for each fiscal year and a total of MEVA values;
Fig. 7 is a diagram showing a typical screen displaying an analysis of differences between forecast and record MEVA values;
Fig. 8 is a diagram showing a typical screen displaying a distribution of net operating profits after tax totaled for an entire period of a business plan of a specific business unit;
Fig. 9 is a diagram showing a typical screen displaying a list of major financial statements figures of all businesses;
Fig. 10 is a diagram showing a typical screen displaying the relationship between the MEVA and invested capital according to the business unit (to be invested);

Fig. 11 is a diagram showing a typical screen displaying risk and return values of each business and the entire enterprise, and an effective frontier curve depicting an efficient business composition;

Figs. 12A and 12B are diagrams showing typical screens displayed when a cursor is aligned with the total of all businesses and each of the different businesses shown in Fig. 11, respectively;

Fig. 13 is a diagram showing a typical screen displaying percentage distribution of businesses on the effective frontier;

Fig. 14 is a diagram showing a typical screen displaying MEVA of each business and a marginal effect of the business in question on the entire enterprise (increased or decreased effect of MEVA), or Accumulated Discounted-MEVA;

Fig. 15 is a diagram showing a typical screen displaying an accumulated discounted value of MEVA of each business and an effect (marginal accumulated discounted value) of the business in question on the entire enterprise, or Marginal Accumulated Discounted-MEVA;

Fig. 16 is a block diagram showing a system configuration of a business performance index processing system according to an embodiment of the present invention;

Fig. 17 is a flowchart showing processing operations performed for calculating a borrowing cost in a business performance index processing system; and

Fig. 18 is a flowchart showing processing operations performed for calculating MEVA in a business performance index processing system.

Fig 19 is a diagram showing a typical screen displaying graphs.

Fig. 20 is a flow chart of a system of operation. Fig. 21 is a system flowchart showing monthly performance and risk by business unit.

Fig. 22 is a system flowchart showing monthly performance and risk on entire business.

Fig. 23 is a graph showing monthly actual profit and its seasonally adjusted series by business unit. And this graph has monthly forecasted profit based on AR Analysis.

Fig. 24 is a graph showing monthly actual ROI and its seasonally adjusted series by business unit. And this graph has monthly forecast of ROI based on AR Analysis and MR Analysis.

Fig. 25 is a graph showing actual ROI and the risk (standard deviation) that MAPT analysis estimates.

Fig. 26 is a graph showing the achieve probability and the loss probability by business unit.

Fig. 27 is a graph showing efficient frontier and each business unit position and present business portfolio position.

Fig. 28 is a graph showing the actual ROI and the expected ROI and WACC by business unit.

Fig. 29 is a graph showing influence (contribution value) that a macro index should have given to profit of entire business.

Fig. 30 is a graph showing present influence (exposure) that a macro index should have given to profit of entire business.

Fig. 31 is a graph showing past and present influence (exposure) that a macro index should have given to profit of entire business.

Fig. 32 is a graph showing MEVA and influence that business gives portfolio (Marginal value) by business unit.

Description of the Preferred Embodiments

The calculations performed to obtain market efficiency value added, or MEVA, that serves as a business performance index and display thereof in the business performance index processing system according to the present invention may find applications in the following. Namely, it may be applicable to a value analysis, in which it is decided whether or not to invest in a new business to be started. It may also appropriately be applicable to determining whether or not an entire enterprise or a specific existing business unit is efficient or dynamic and revitalized enough.

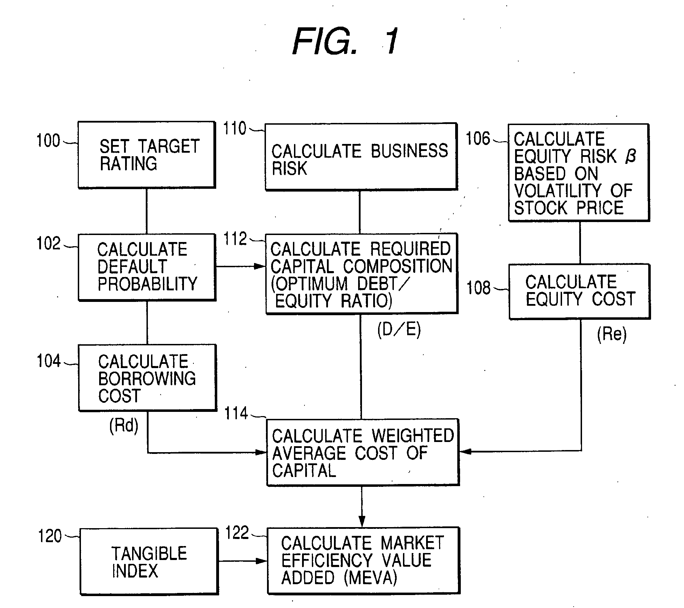

Fig. 1 is a flowchart of computer processing performed by a business performance index processing system according to an embodiment of the present invention.

The MEVA is calculated as follows. It is calculated by subtracting a cost of capital invested in a business from a profit earned by the business. Namely, it is expressed as:

$$\text{Market Efficiency Value Added} = \text{Net Operating Profit}$$

$$\text{after Tax} - \text{Cost of Capital} \qquad (1)$$

The net operating profit after tax is a net profit before interest after tax as calculated according to accounting rules.

The cost of capital is calculated as described below. The invested capital is, to begin with, expressed as:

$$\text{Invested Capital} = \text{Debt} + \text{Equity} \qquad (2)$$

The invested capital is therefore the sum of a fund (debt) raised as the money borrowed from financial institutions or the like and issued bonds, and a fund (equity) raised as the capital stock obtained as a result of issuing stocks or the like and retained earnings or the like. It represents a fund that is needed to set up and carry out the business. Further, it is necessary to pay a source of the fund the cost that corresponds with the business, that is, the cost of capital. The ratio of the cost of capital to the invested capital is the weighted average cost of capital. Namely, it is expressed as:

$$\text{Cost of Capital} = \text{Weighted Average Cost of Capital} \times$$

$$\text{Invested Capital} \qquad (3)$$

The cost of capital may be divided into a portion involved with debt and a portion involved with equity. Namely, it is expressed as:

$$\text{Cost of Capital} = \text{Borrowing Cost} \times \text{Debt} + \text{Equity}$$

$$\text{Cost} \times \text{Equity} \qquad (4)$$

The borrowing cost refers to an interest rate of borrowings, and the equity cost refers to an expected return on equity demanded by stockholders, such as dividends paid to stockholders or an increase in retained earnings. The weighted average cost of capital may be expressed by dividing each of both sides of (4) by the invested capital. Namely, it is expressed as:

$$\text{Weighted Average Cost of Capital} = \text{Borrowing Cost} \times$$

$$\text{(Debt/Invested Capital)} + \text{Equity Cost} \times \text{(Equity/Invested}$$

$$\text{Capital)} \qquad (5)$$

The weighted average cost of capital can be calculated by obtaining a weighted average of the borrowing cost and the equity cost in terms of the capital composition.

When the weighted average cost of capital is calculated and the cost of capital can be obtained, it then becomes possible to calculate MEVA using equation (1).

From the viewpoint of an entire enterprise, the borrowing cost and an equity ratio are determined efficiently in the market, which allows the cost of capital to be calculated relatively easily.

Assume, on the other hand, that it is attempted to calculate the cost of capital of each business unit within an enterprise. The capital invested in a specific business unit represents a share of the total invested capital appropriated for that particular business unit out of the total invested capital of the enterprise. The weighted average cost of capital of each individual business unit is therefore not constant. The following method is therefore employed to virtually divide the invested capital for each business unit into debt and equity, thereby obtaining the weighted average cost of capital of each. This weighted average cost of capital is then used to arrive at the cost of capital.

Referring to Fig. 1, the borrowing cost is first calculated.

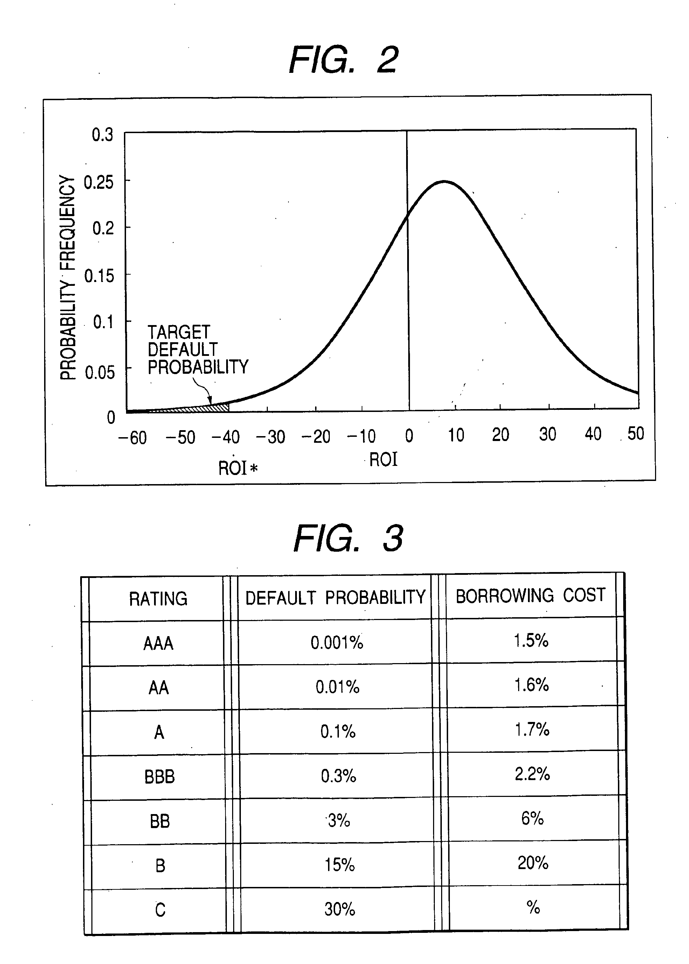

Calculation of the borrowing cost proceeds as follows. First of all, default probability and borrowing cost values associated with different credit ratings are established as shown in Fig. 3 using a database that stores therein past default records, actual market standings, and the like. When a target rating of the business unit to be evaluated is set in step 100, the default probability of the business unit concerned is determined in step 102, and the borrowing cost (Rd) of the business unit concerned is determined in step 104.

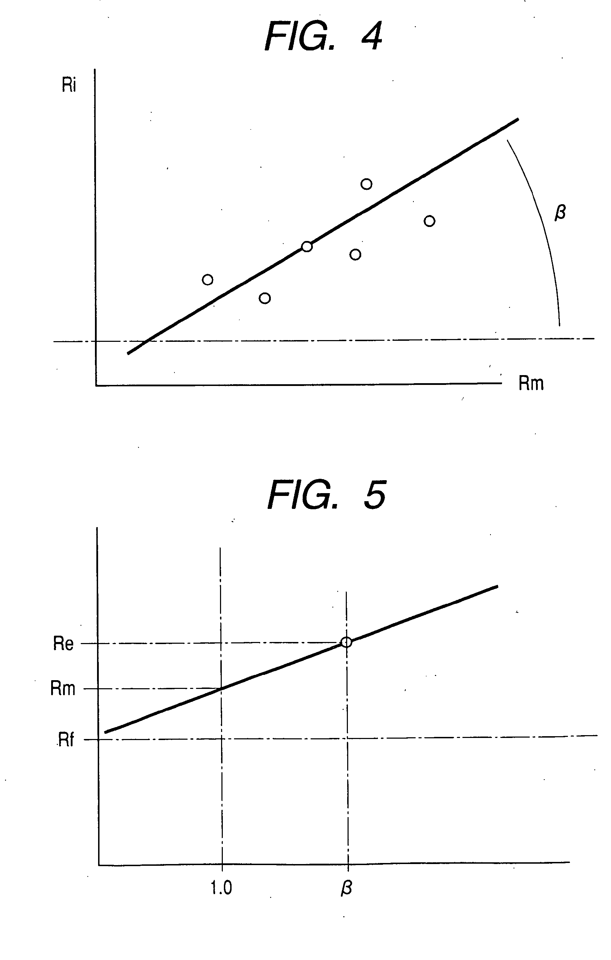

Calculation of the equity cost of the business unit concerned is then performed. The equity cost represents the cost for the equity (dividends to be paid to stockholders or an increase in retained earnings). Calculation of the equity cost (Re) proceeds as follows. In step 106, an equity risk index $\beta$ is calculated using past data of the return of the target enterprise (Ri) (or the per share earning ratio of a company in the same industry, if the target enterprise is not listed) and the return of a stock market (Rm) (for example, TOPIX), as shown in Fig. 4. The equity risk index $\beta$ can be obtained using the following equation:

$$\beta = \text{(covariance between the stock price and}$$

$$\text{TOPIX)/(variance of TOPIX)} \tag{6}$$

The equity cost (Re) is then calculated in step 108. The equity cost (Re) is obtained from a diagram, as shown in Fig. 5, in which the horizontal axis represents values of the equity risk index $\beta$, while the vertical axis represents the return (R). Referring to Fig. 5, assume that the per share earning ratio of the stock market (for example, TOPIX) is Rm when the equity risk index $\beta$ is 1.0. Assume also that a rate of return on risk-free assets such as sovereign bonds is Rf. The per share earning ratio when the equity risk index obtained in Fig. 4 is $\beta$ is the equity cost (Re).

Using a capital asset pricing model (CAPM) and the equation given in the following, the equity cost (Re) is therefore calculated from Rf and Rm:

$$Re = Rf + \beta \times (Rm - Rf) \tag{7}$$

Calculation for the required capital composition (an optimum debt/equity ratio) is next performed. It is obtained from the default probability (e.g., 0.1%) determined in step 102 and a business risk. The business risk can be represented by a stochastic distribution of the ratio (ROI, or Return on Investment) of the value of profit (operating profit) to the invested capital (the invested amount of money).

Reference is now made to Fig. 2, in which the horizontal axis represents ROI values (%) and the vertical axis represents a probability frequency. In the graph (showing an ROI distribution curve) shown in Fig. 2, a specific ROI value is identified according to the default probability (e.g., 0.1%) and the capital composition (the debt/equity ratio) corresponding to the identified ROI value is obtained. This capital composition (the debt/equity ratio) therefore fluctuates depending on the business risk (ROI distribution) and a set target credit rating (that is, the default probability).

The following description elaborates on it. In the ROI distribution curve shown in Fig. 2, assume that the entire area defined by the ROI distribution curve is 1. Focusing only on an extreme end of the negative ROI value as data of immediate concern allows to find the ROI distribution point, at which the area of the chart is 0.1%. The area of chart of 0.1% indicates that there is an only 0.1% probability of a loss increasing than this. The ROI value corresponding to the area of 0.1% may be, for example, -40%. This means that, for an enterprise (business) having an ROI distribution as shown in Fig. 2, the equity accounts for 40% of the invested capital (debt + equity). It therefore follows that, for an enterprise (business) having an ROI distribution curve as shown in Fig. 2, it is necessary that the equity accounts for 40% of the invested capital in order to set the default probability at 0.1%.

The required capital composition (an optimum debt/equity ratio) and the weighted average cost of capital are calculated as described in the foregoing. In step 120, the net operating profit after tax is obtained according to accounting rules. In step 122, the MEVA is calculated as detailed below using the weighted average cost of capital calculated in step 114.

Market Efficiency Value Added (MEVA) = (Net Operating Profit after Tax/Invested Capital - Weighted Average Cost of Capital) x Invested Capital In the process of obtaining the weighted average cost of capital, consideration has been given to maintaining consistency between the bond market and the stock market in regard to the borrowing cost, equity cost, and the debt/equity ratio. This makes it possible to calculate a market efficiency business value.

In step 124, a Marginal Accumulated Discounted-MEVA, or MAD-MEVA, is calculated in order to measure a marginal effect of an individual business in an enterprise-wide portfolio.

When calculating an Accumulated Discounted-MEVA, or AD-MEVA, an adjustment is made using a "risk-free rate" or the "weighted average cost of capital" before adding up MEVA values between different points in time. Specifically,

$$\text{AD-MEVA} = \Sigma \{\text{MEVAt}/(1 + r) \text{ t-s}\}$$

where, t: period to be evaluated; s: reference period for evaluation; MEVAt: MEVA record for period t; r: risk-free rate (government bond rate or the like) or weighted average cost of capital.

The following concept is applied to the measurement method of the marginal effect. Assuming a business portfolio X comprising three businesses of A, B, and C, each MEVA can be expressed as follows based on equation (1).

$$\text{MEVA A} = \text{Net Operating Profit after Tax A - Cost of}$$

$$\text{Capital A}$$

$$\text{MEVA B = Net Operating Profit after Tax B - Cost of}$$

$$\text{Capital B}$$

$$\text{MEVA C = Net Operating Profit after Tax C - Cost of}$$

$$\text{Capital C}$$

$$\text{MEVA X = Net Operating Profit after Tax X - Cost of}$$

$$\text{Capital X}$$

The following relationship holds true between the net operating profit after tax of each individual business and the net operating profit after tax of the business portfolio.

$$\text{Net Operating Profit after Tax X = Net Operating}$$

$$\text{Profit after Tax A + Net Operating Profit after Tax B + Net}$$

$$\text{Operating Profit after Tax C} \qquad (9)$$

The relationship between each business and the business portfolio is as follows in terms of the cost of capital.

$$\text{Cost of Capital X = Cost of Capital A + Cost of}$$

$$\text{Capital B + Cost of Capital C} \qquad (10)$$

Since it can be expected that a business risk forming part of the cost of capital is reduced by the effect of diversification of portfolio, the cost of capital of the business portfolio can be eventually smaller. From equations (9) and (10), the following relationship therefore holds true between each individual business and the business portfolio in terms of MEVA.

$$\text{MEVA X} \geqq \text{MEVA A + MEVA B + MEVA C} \qquad (11)$$

Specifically, as the number of businesses that make up the business portfolio increases, it becomes more likely that the MEVA of the entire business portfolio is greater than the simple addition of MEVA values involved with individual businesses. An effective business portfolio management can therefore be implemented by comparatively examining the MEVA value of each individual business and the difference in MEVA values between the MEVA value before and that after the business in question is added (marginal MEVA).

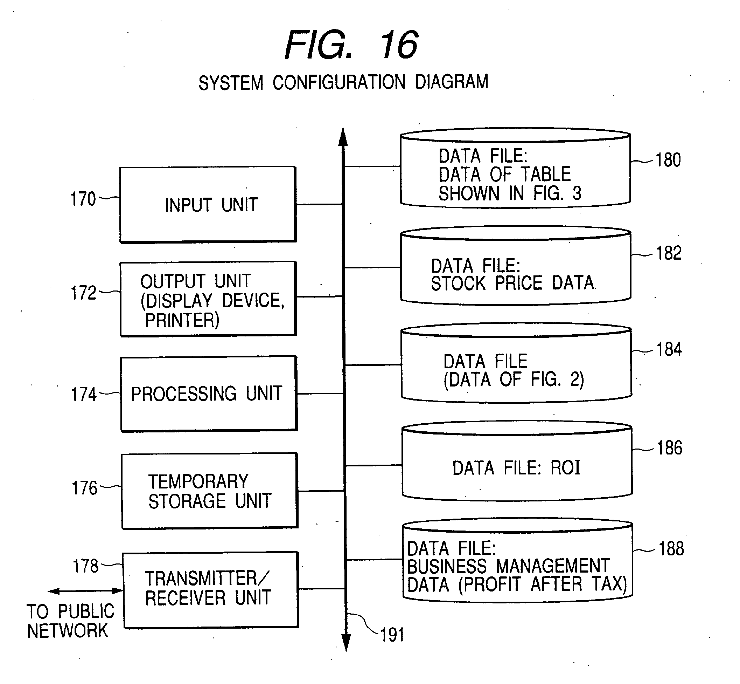

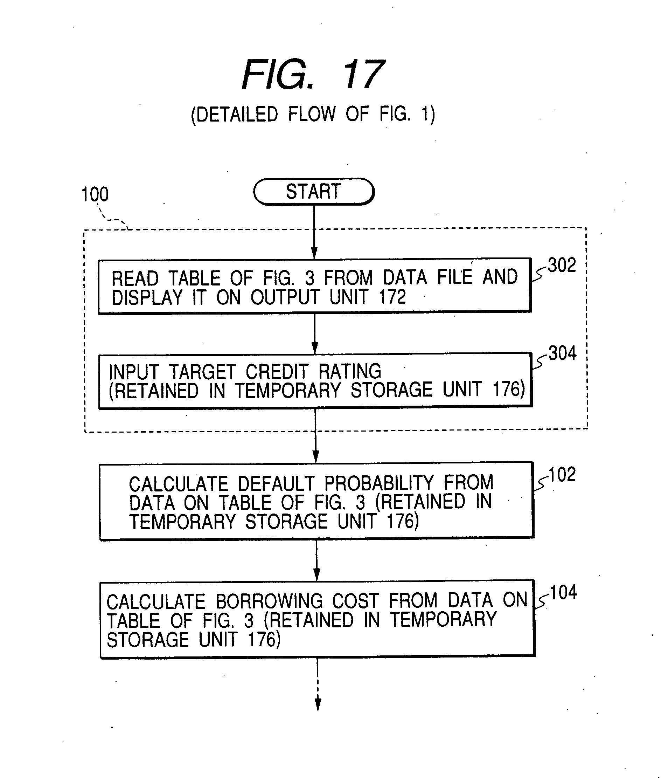

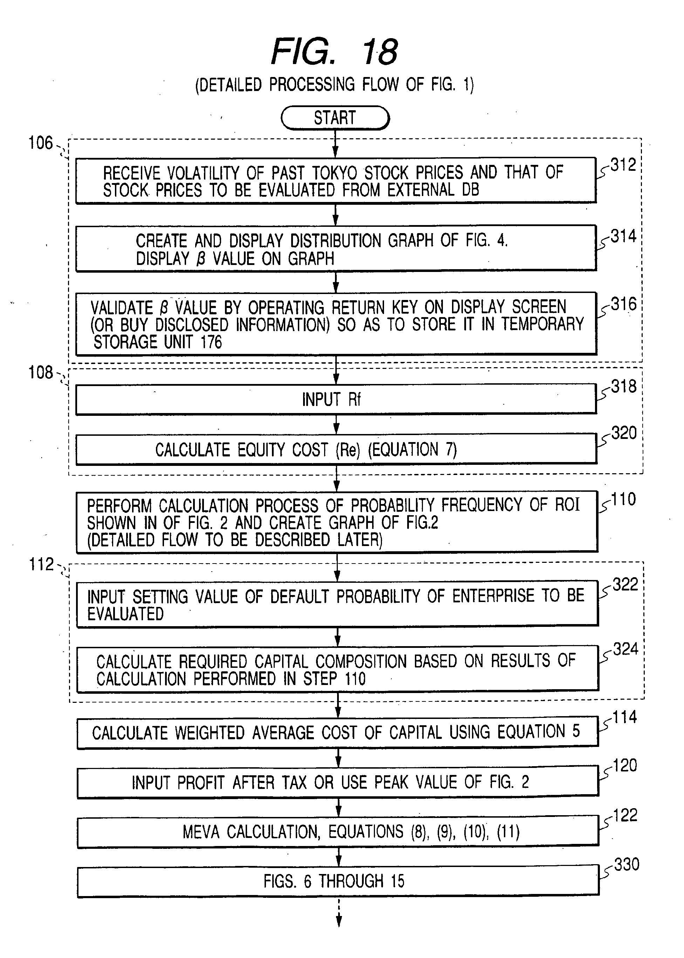

The system and processing operations thereof will be described with reference to the system configuration diagram for implementing a business performance index processing system shown in Fig. 16 and detailed flowcharts shown in Figs. 17 and 18.

The system shown in Fig. 16 is what is called a computer system, comprising an input unit 170, an output unit 172, a processing unit 174, a temporary storage unit 176, a transmitter/receiver unit 178, and a storage unit storing various types of data files 180 to 188, all connected to a bus 192.

The input unit 170 is an input means of a known personal computer, or PC, provided with keys for data entry or a mouse. It may further include a reader for a recording medium such as a CD. The output unit 172 is a display device of the PC and a printer. The processing unit 174 may be a processor of the PC or that of a server. The temporary storage unit 176 is a main memory of the PC or a server. This system may be connected by way of the transmitter/receiver unit 178 to an external computer system through a public network such as the Internet.

The data file 180 stores therein a table of credit ratings relating to corresponding default probability and borrowing cost values shown in Fig. 3. This table is generally created as follows. Namely, credit rating data and default probability data which are disclosed by credit-rating firms are purchased and input through the input unit 170. The borrowing cost data is purchased from banks in a form created by the banks and input through the input unit 170. The processing unit 174 edits and processes the data input through the input unit 170 and the resultant processed data is stored in memory as the data file 180.

The data file 182 stores therein stock price data. The data file 184 stores data on ROI/probability distribution shown in Fig. 2. The data file 186 stores files of ROI. The data file 188 stores the business management data.

Processing for calculation of the borrowing cost shown in Fig. 1 will be described with reference to Fig. 17. The tabulated data of Fig. 3 is read from the data file 180 for setting of credit rating and displayed on the output unit 172 (302). The credit rating is then input through the input unit 170. It is temporarily stored in the temporary storage unit 176 (304). The processing unit 174 next calculates the default probability from the tabulated data of Fig. 3. The result thereof is temporarily retained in the temporary storage unit 176 (102). The processing unit 174 then calculates the borrowing cost from the tabulated data of Fig. 3.

Calculation of the market efficiency value added (MEVA) will be described with reference to Fig. 18. To calculate the equity risk $\beta$ from volatility of the stock prices (step 106), volatility of past Tokyo stock prices and that of the stock prices to be evaluated are obtained from an external database through the transmitter/receiver unit 178 (312). While this data is stored in the data file 182, the processing unit 174 not only creates the distribution graph shown in Fig. 4 to display it on the output unit 172, but also displays the $\beta$ value plotted on the graph (314). The $\beta$ value plotted on the graph is validated by operating a return key on the display screen. This value is stored in the temporary storage unit 176. For the calculation of the equity cost (step 108), the processing unit 174 calculates the equity cost (Re) (320) after Rf has been input (318).

For the calculation of the business risk, the processing unit 174 calculates the ROI probability distribution shown in Fig. 2 using the historical method or the simulation method, and creates the graph of Fig. 2 (110).

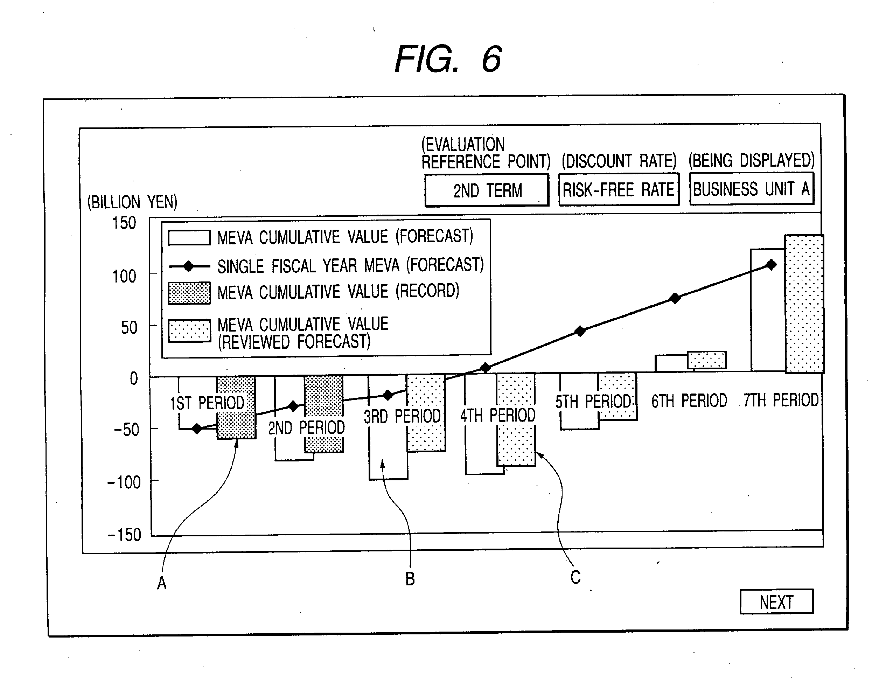

For the calculation of the required capital composition (112), when a setting value for the default probability of the enterprise to be evaluated is entered through the input unit 170 (322), the processing unit 174 calculates the required capital composition based on the result of calculation of the business risk (110) and the default probability (102). The processing unit 174 then calculates the weighted average cost of capital according to equation (5) (114). The unit 174 further calculates MEVA using data of profit after tax acquired from the data file 188 or a tangible index such as the peak value shown in Fig. 2 entered (120). This calculation is performed in accordance with equations (8), (9), (10), and (11) (Step 122). The processing unit 174 creates the graph shown in Fig. 6 and subsequent ones to show the result of the calculations performed and makes the display device of the output unit 172 display it.

The results of the calculations performed by the processing unit 174 are temporarily stored in the temporary storage unit 176 at different stages in the middle of calculation processes before the output is provided for the display. Those who are involved with a business performance evaluation make an investment decision by studying the graph that is displayed.

Displays of various kinds concerning MEVA will be described. MEVA for a single fiscal year and cumulative MEVA for each year for each business unit are displayed as shown in Fig. 6. The line graph shown in Fig. 6 represents numeric values of MEVA of each single fiscal year, while the bar graph shown in Fig. 6 represents the cumulative value thereof. Displaying both the line graph showing changes in the value of single fiscal year and the bar graph showing changes in the cumulative value makes it possible to even more appropriately identify performance of the business unit concerned. When more periods elapse to allow actual values of MEVA to be measured, it becomes possible to display in a bar graph the record values or cumulative values thereof in comparison with the original forecast values or cumulative values thereof.

In this display of MEVA, a specific business unit, for which the displayed data is intended, can be selected by dropping down a key marked with "Business Unit A" being displayed in the display shown in Fig. 6. The discount rate applicable to aggregating can also be selected by dropping down a key for the discount rate and selecting, for example, "risk-free rate." The reference point for evaluation is also selectable by dropping down a key for the evaluation reference point in Fig. 6 and selecting, for example, the "2nd Period."

Segment of data in the display of MEVA may also be selectively displayed, either individually for the total of all businesses, each business unit (business A, business B, business C, ...), and for each project to be invested (project a, project b, project c, ...), or collectively for comparison among a plurality of segments.

The calculation period for MEVA may be annual, semi-annual, quarterly, or monthly and the display can be given for each period of calculation basis.

Clicking each bar of the bar graph shown in Fig. 6 will display data as shown below. Specifically, clicking the bar for the third period marked with B will display the following:

a) MEVA for the third period: X billion yen

b) Cumulative MEVA up to the third period: X billion yen (breakdown: plus X billion yen, minus X billion yen)

c) Expected cumulative MEVA for the fourth and subsequent periods: X billion yen (breakdown: plus X billion yen, minus X billion yen).

A display example shown in Fig. 6 is used by those who make an investment decision and those who formulate an investment plan when they attempt to measure the business value of the investment plan in question and use as bases for making a decision as to whether or not to invest in the business. As time elapses after the investment plan has been formulated to allow actual values to be measured, Fig. 6 may also be used for comparison and verification against the forecast values projected when the plan was first formulated.

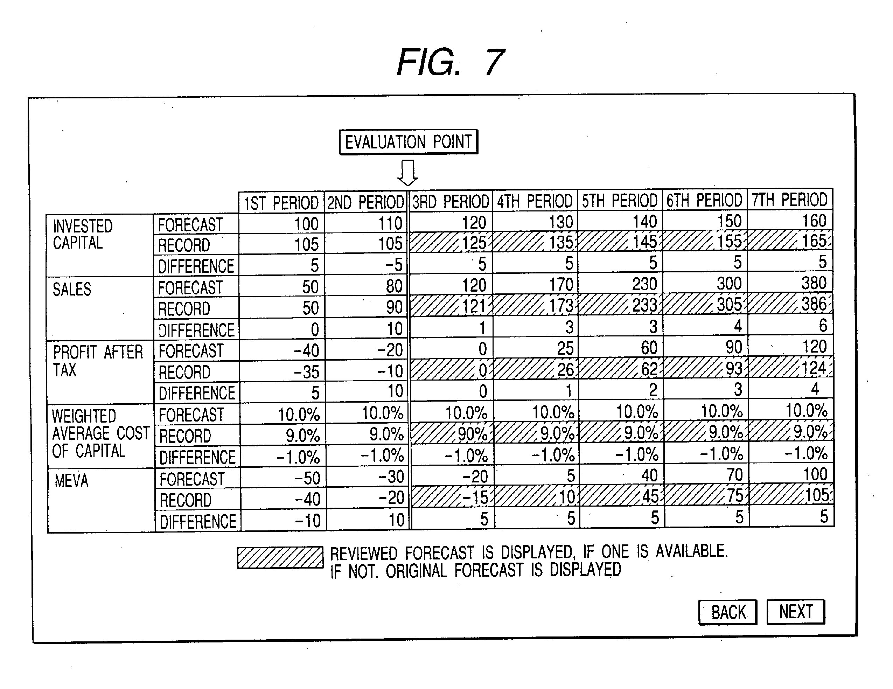

If any of the record values shown in Fig. 6, for example, A is clicked, it will display a screen that makes an analysis of differences from the forecast values (Fig. 7). Specifically, Fig. 7 displays a comparison between the forecast and record values of MEVA, and a verification and deviation analysis between the two. In more specific terms, the forecast and record values of MEVA shown in Fig. 6 are tabulated according to the period. In addition, Fig. 7 also gives data for the invested capital, sales, net operating profit after tax, and weighted average cost of capital that are required when calculating the MEVA in question. It displays the forecast and record values side by side and gives a difference between the two for each of these parameters, thus allowing a difference analysis for each to be made easily.

Furthermore, if the plan is reviewed at the time of evaluation, it is possible to display in the screen shown in Fig. 7 reviewed forecast values in the record value column after evaluation (for example, at the end of the second period). This makes it possible to identify the situation as immediately near as possible.

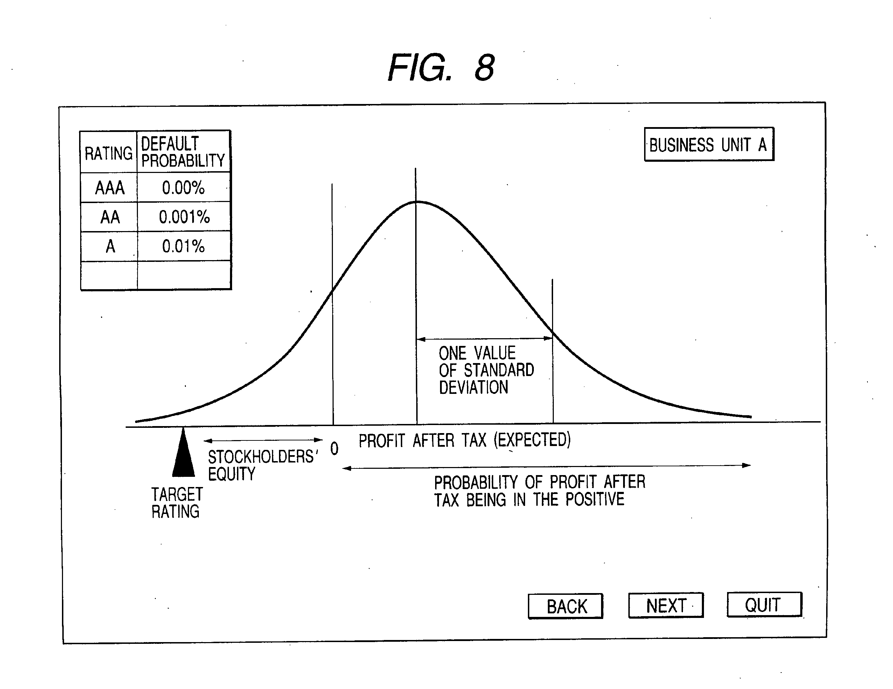

Clicking [Back] in the display screen shown in Fig. 7 will cause the screen shown in Fig. 6 to reappear. Clicking [Next] in the screen shown in Fig. 7 will show the screen shown in Fig. 8.

Fig. 8 shows a screen that displays a business risk of a particular business unit. Specifically, the horizontal axis represents the net operating profit after tax, while the vertical axis represents frequencies of corresponding values of the net operating profit after tax occurring. Fig. 8 is a diagram showing distribution of net operating profit after tax values tallied up for the entire period of a business plan for business unit A. The specific business, for which data is to be displayed, may nonetheless be selected by dropping down the box of the business unit name. The data may also cover a specific business plan or an entire enterprise, in addition to the specific business unit.

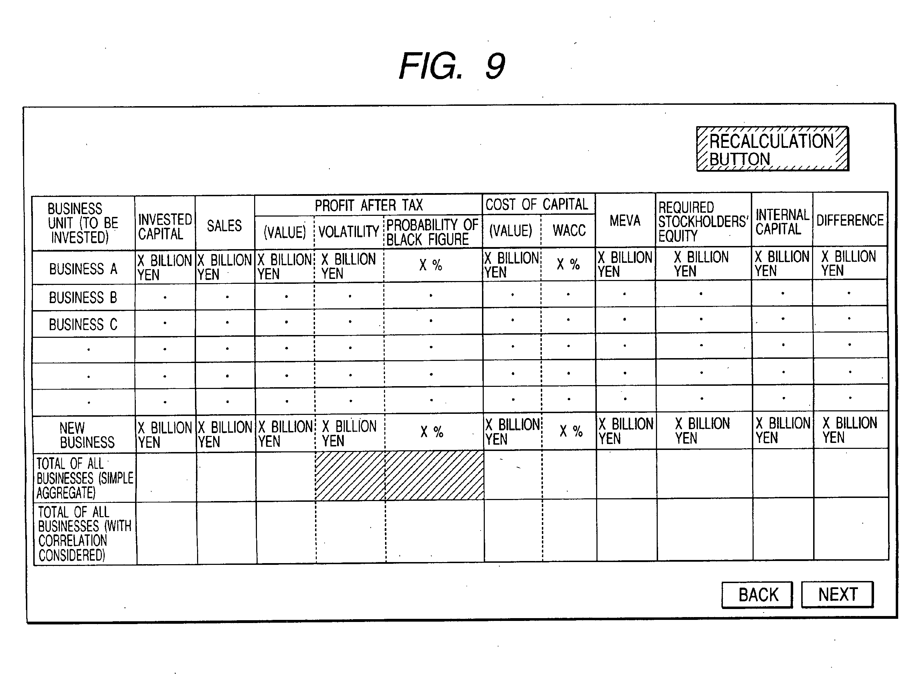

In the screen as shown in Fig. 8, the target rating moves horizontally to the right or left accordingly across it when the rating of "A," "BBB," or the like or the default probability of 0.01% or the like is entered, or selected from the rating/default probability table shown in the screen. In addition, clicking different parts of the screen as shown in Fig. 8 will display different numeric values as detailed in the following. Namely, clicking stockholders' equity will show "Stockholders' equity: X billion yen." Clicking profit after tax (expected) will show "Profit after tax (expected): X billion yen." Clicking one value of standard deviation will show "1σ: X billion yen." Clicking probability of profit after tax being in the positive will show "Probability of profit after tax being in the positive: X%." Clicking [Back] in the display screen shown in Fig. 8 will cause the screen shown in Fig. 7 to reappear. Clicking [Next] in the screen shown in Fig. 8 will show the screen shown in Fig. 9.

Fig. 9 is a typical screen that displays a list of major financial statements figures (invested capital, sales, net operating profit after tax, cost of capital, MEVA, stockholders' equity, internal capital, and the difference in capital) of each business or all businesses. The recalculation button provided on the display screen of Fig. 9 is used to change the financial statements figures in the screen or to recalculate the figures before and after correlation of all businesses are taken into consideration after figures involved with a new business have been entered.

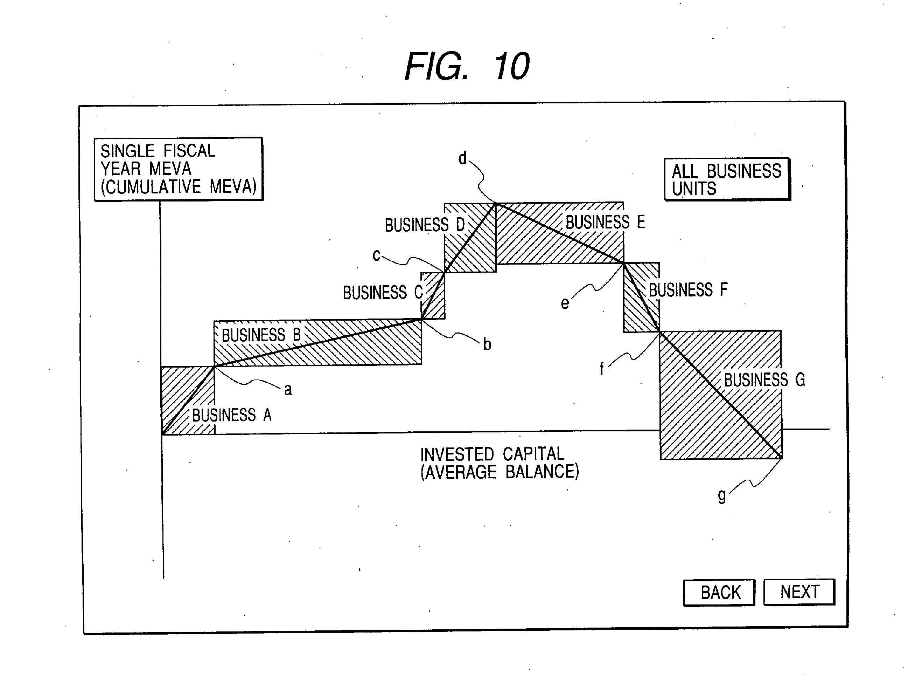

The screen shown in Fig. 9 not only facilitates a comparative examination of each individual business, but also is used to determine how a new business, when it is carried out, affects figures of all other businesses. Clicking [Back] in the display screen shown in Fig. 9 will cause the screen shown in Fig. 8 to reappear. Clicking [Next] in the screen shown in Fig. 9 will show the screen shown in Fig. 10.

Fig. 10 is a diagram that shows a typical screen displaying, in a graph, the relationship between the MEVA and invested capital (debt + equity) according to the business unit (to be invested). It covers all business units to show the relationship between MEVA and invested capital. Although the display screen shown in Fig. 10 covers all business units, it is possible to selectively set a specific business unit by dropping down the box for the business unit.

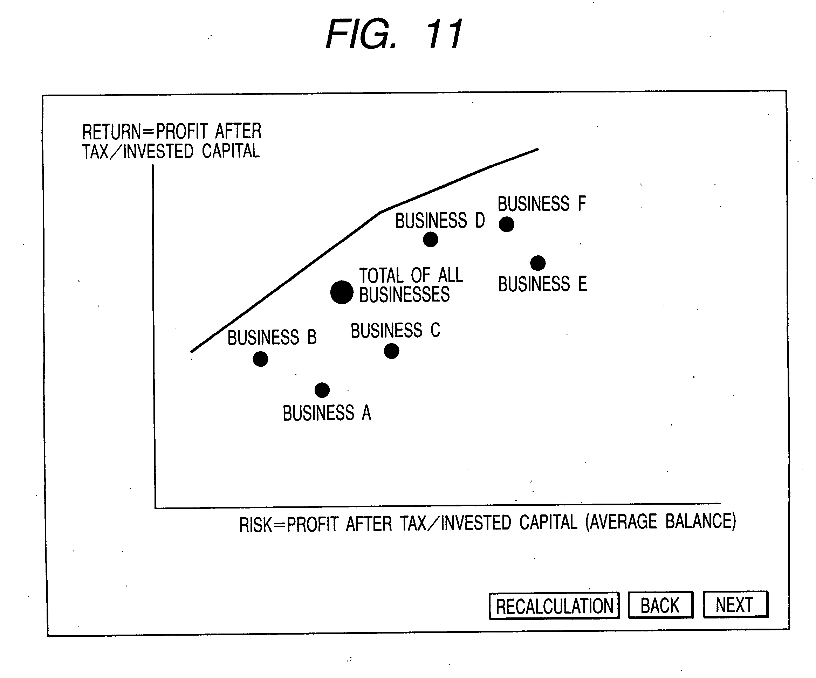

Referring to Fig. 10, for the invested capital given on the horizontal axis, that of all businesses up to business G is equivalent to the total invested capital of the enterprise. The vertical axis, on the other hand, represents the MEVA of a single fiscal year (or the cumulative MEVA). Point a depicts the invested capital and MEVA involved with business A and point b depicts the invested capital and MEVA involved with business B in relation to point a set up as the reference point. Following this procedure, point c represents the invested capital and MEVA involved with business C and point d represents those involved with business D. With business E, since the MEVA value thereof is negative, point e is located downwardly on the right of point d. Likewise, when considering businesses F and G, the MEVA of the entire enterprise is negative. That is, Fig. 10 tells that, while each of the businesses A, B, C, and D works to increase the MEVA of the entire enterprise, each of the businesses E, F, and G works to decrease the MEVA of the entire enterprise. Moving the cursor to each of the different businesses on the graph will display "MEVA xx billion yen (ratio to the total of all MEVA values) and invested capital xx billion yen (ratio to the total of all invested capitals)" of that particular business. Further, double-clicking a specific business will display the MEVA and other values of that particular business in the format shown in Figs. 6, 7, and 8. Clicking [Back] in the display screen shown in Fig. 10 will cause the screen shown in Fig. 9 to reappear. Clicking [Next] in the screen shown in Fig. 10 will show the screen shown in Fig. 11.

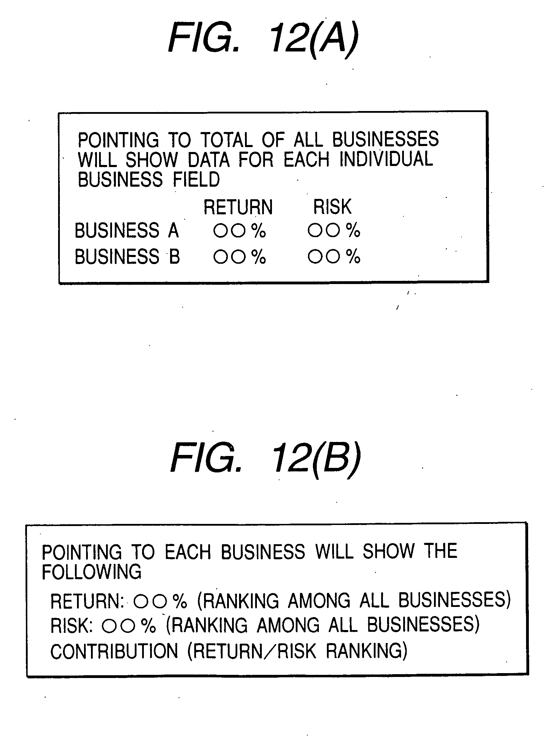

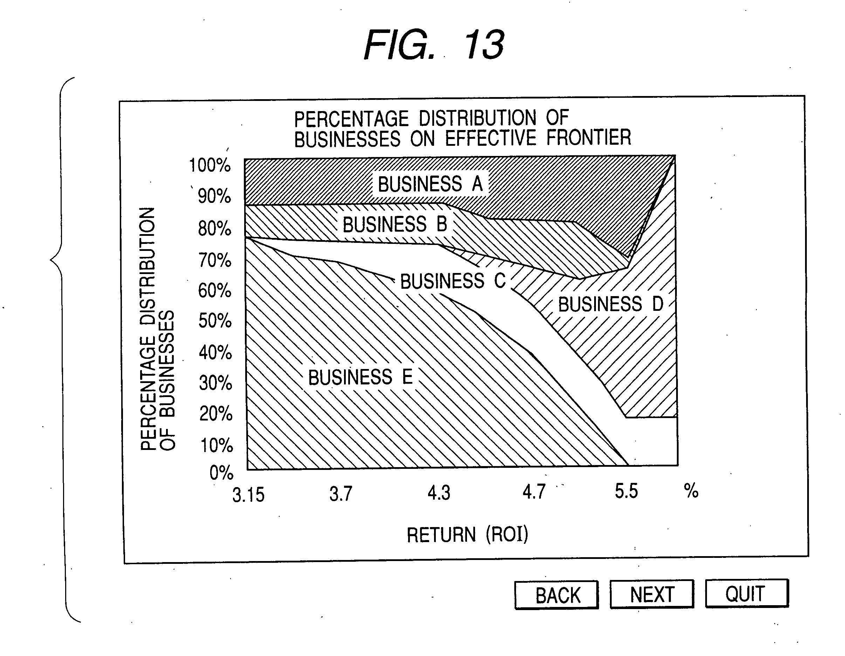

Fig. 11 is a diagram that shows a typical screen displaying risk and return values of each business and the entire enterprise. The display screen also shows a composition of different businesses that realizes an expected return with the minimum risk (an effective frontier) as selected from among the existing businesses. In the display screen shown in Fig. 11, pointing to total of all businesses will display data (return: XX%; risk: XX%) for each individual business field as shown in Fig. 12A. Clicking each business in the display screen shown in Fig. 11 will jump to the display screen shown in Figs. 6 and 7 for the specific business. Further, pointing to each business will display "return: XX% (ranking among all businesses); risk: XX% (ranking among all businesses); and contribution (return/risk ranking)" as shown in Fig. 12B. To recalculate the total of all businesses and the effective frontier after the number of the businesses shown in Fig. 9 has been increased or decreased (by abandoning an existing business being carried out or starting a new one), the [Recalculation] button is clicked. Furthermore, pointing to the effective frontier curve in the display screen as shown in Fig. 11 will display the percentage distribution of businesses shown in Fig. 13.

Fig. 13 is a diagram that shows a typical screen displaying percentage distribution of businesses on the effective frontier. The horizontal axis represents values of the return (ROI) and the graph shows changing percentage distributions of businesses with varying return values. Specifically, pointing to the effective frontier curve on the display screen shown in Fig. 11 will display a graph showing the percentage distributions of businesses on the effective frontier as shown in Fig. 13. In the percentage distributions of businesses shown in the display screen as shown in Fig. 13, taking a specific return value on the horizontal axis (for example, a return value of 3.7%) provides the specific percentage distributions of different businesses as detailed in the following. Namely, business A is 15%, business B is 10%, business C is 5%, business E is 70%, and business D is 0%. Taking another specific return value on the horizontal axis (for example, a return value of 4.7%) provides the specific percentage distributions of different businesses as follows: namely, business A is 20%, business B is 15%, business C is 15%, business E is 40%, and business D is 10%. This means that selecting a specific return value will give specific percentage distributions of different businesses that allow to stably achieve a target. Clicking [Back] in the display screen shown in Fig. 13 will cause the screen shown in Fig. 11 to reappear. Clicking [Quit] in the screen shown in Fig. 13 will close the screen shown in Fig. 13, causing the initial screen shown in Fig. 6 to reappear.

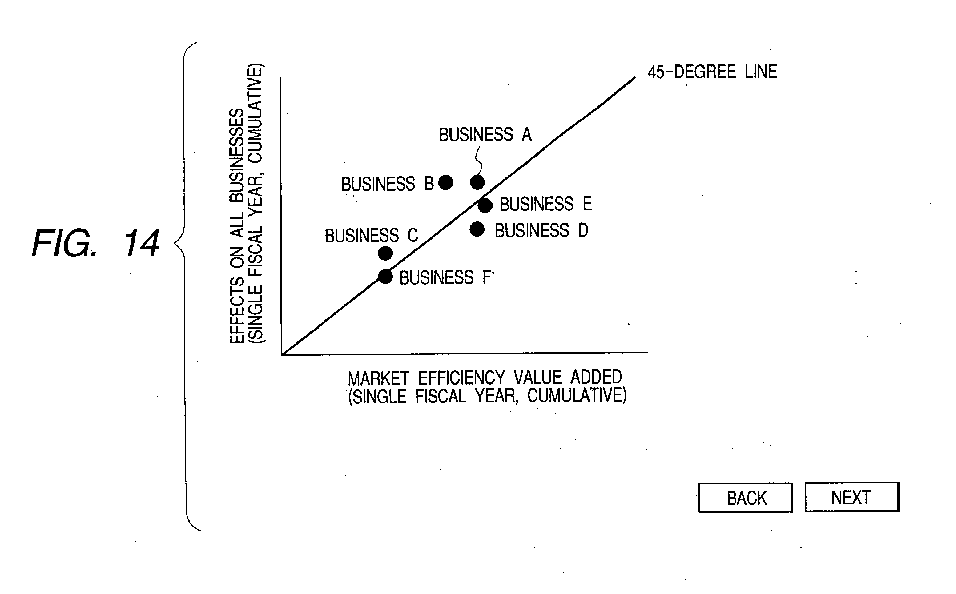

Fig. 14 is a diagram that shows a typical screen displaying MEVA of each business and an effect of the business in question on the MEVA value of the entire enterprise (increased or decreased effect of MEVA). Specifically, the balance in the MEVA value of the entire enterprise between that including the business in question and that excluding the same is obtained to determine contribution of the business concerned. This serves as a reference when starting a new business and considering the effect of the new business on the existing businesses.

In the display screen as shown in Fig. 14, the horizontal axis represents the MEVA of each business, while the vertical axis represents the effect on all businesses (Marginal Accumulated Discounted-MEVA, or MAD-MEVA). The screen shows this relationship for each business. The effect on all businesses (Marginal Accumulated Discounted-MEVA, or MAD-MEVA) means the degree of how much the addition of the business in question to the business portfolio increases the cumulative discounted value of the MEVA of the business portfolio. If the point of a specific business is located above the 45-degree line, it is known that the specific business in question contributes to the business value of the entire enterprise more than the value of the specific business. If the point of a specific business is located below the 45-degree line, on the other hand, it is known that the business value of the entire enterprise does not increase so much as the MEVA of the specific business in question. For an enterprise-wide business portfolio management, therefore, the display serves as a reference for making a decision that ensures even more efficient business operations, while taking into consideration diversification effect and synergy effect. Clicking [Back] in the display screen shown in Fig. 14 will cause the screen shown in Fig. 13 to reappear.

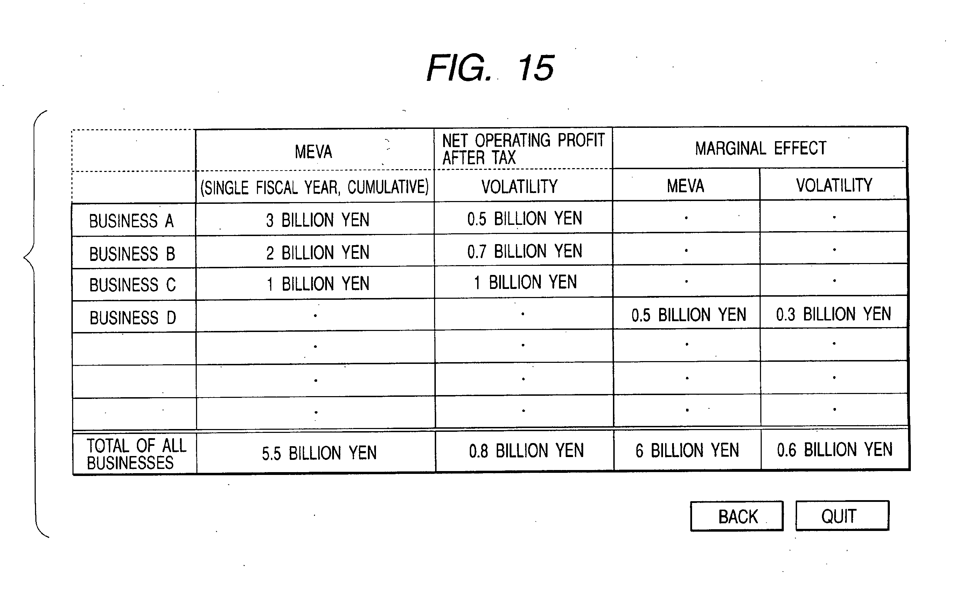

Fig. 15 is a diagram that shows a typical screen displaying, in a table, an accumulated discounted value of MEVA of each business and an effect (marginal accumulated discounted value) of the business in question on the entire enterprise, that is Marginal Accumulated Discounted-MEVA or MAD-MEVA, shown in Fig. 14. Preparing an at-a-glance table facilitates a comparative analysis between different pairs of businesses. It serves as a primary source of decision-making for building an even more efficient business portfolio.

They are other cases of embodiments. Fig. 6 explained previously shows the graph which displayed on the display the progress mouth, the actual result value, and the reexamination plan value of MEVA. In this figure 6, if the numerical value which shows other management states, for example, the numerical value of balance sheet (state of property and a debt, and capital) or cash flow, can be displayed on a display, it will be great help to a manager.

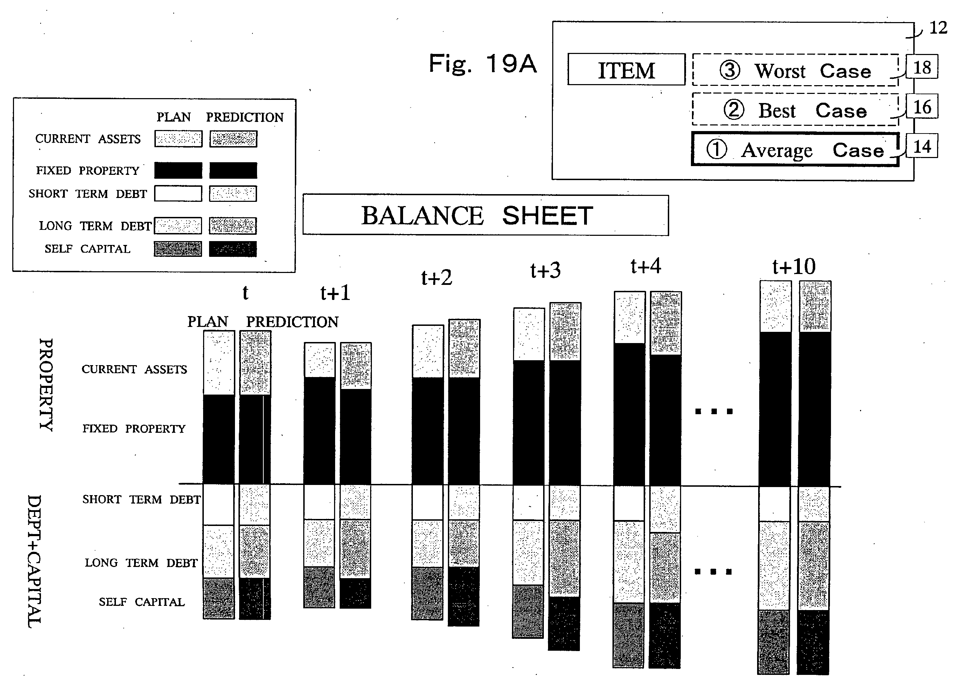

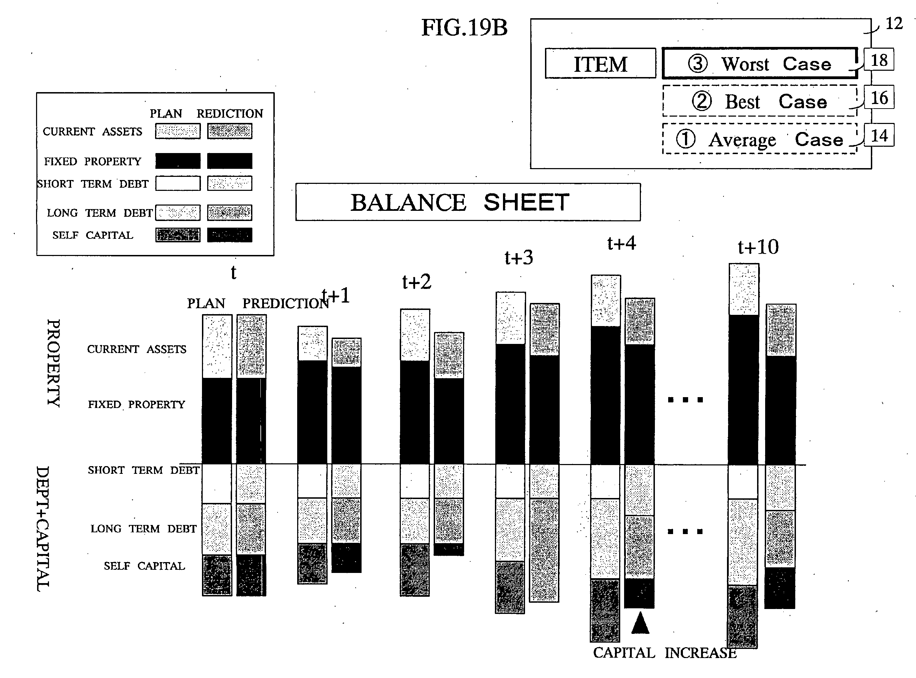

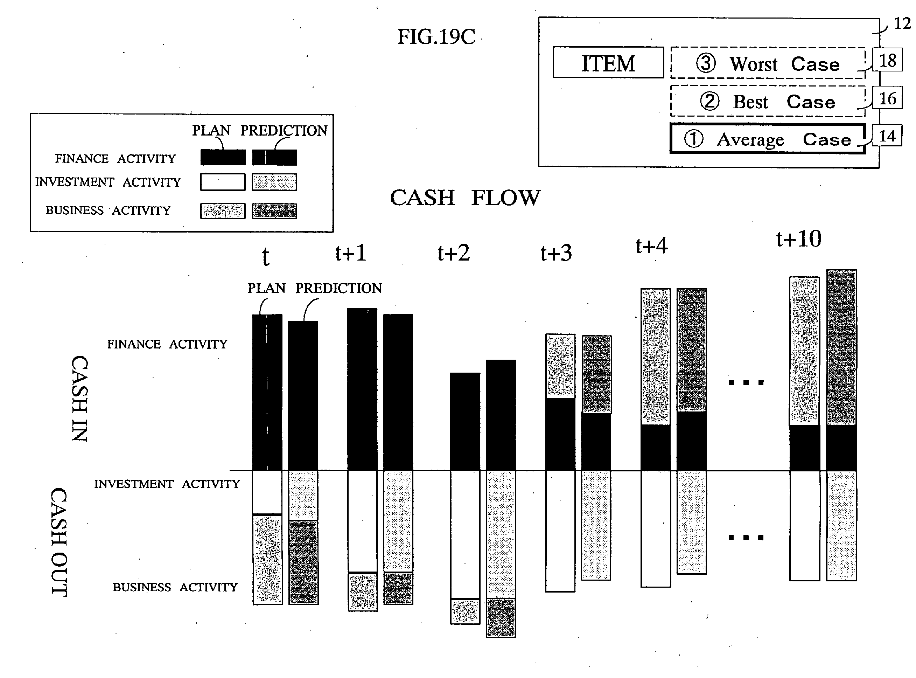

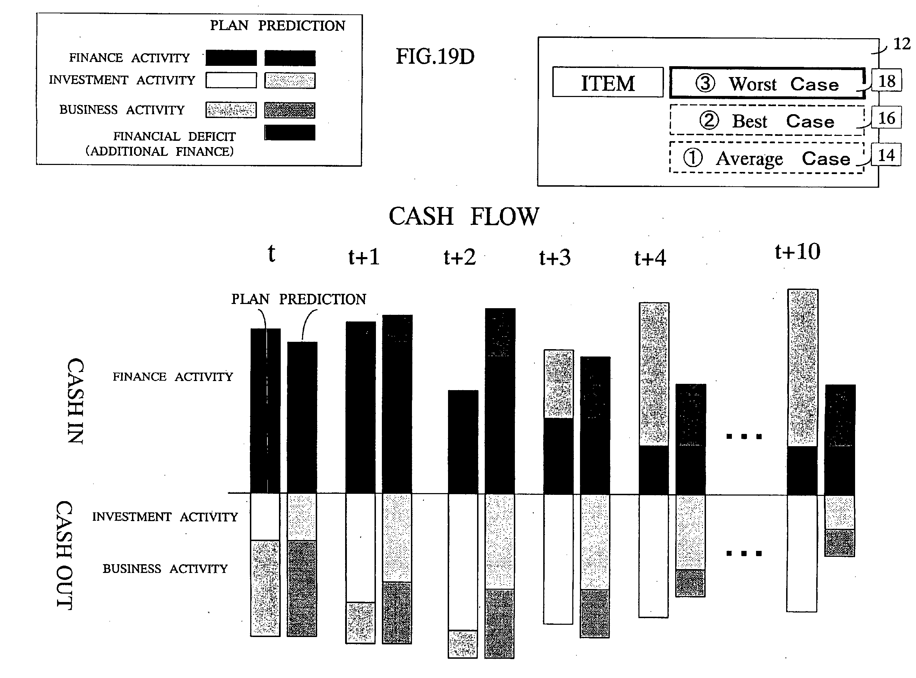

Although Fig. 6 did not explain, if operation of changing the contents of a display is performed by operating a change button etc., it will change to the graph of the data chosen from the graph about MEVA currently displayed in Fig. 6. For example, when balance sheet is chosen by operation of the above-mentioned change button, the graph of the balance sheet shown in figure 19A or figure 19B is displayed on the display. Moreover, if cash flow is chosen as a change of the graph about MEVA, the graph of the cash flow shown in figure 19C or figure 19D will be displayed on a display.

Figure 19A is the figure which displayed the graph of the average case of the range of fluctuation when predicting the future of the state of the selected property for every enterprise fiscal year and the selected debt, and capital.

Figure 19B is the figure which displayed the graph of the bad case of fluctuation when predicting the future of the state of the selected property for every enterprise fiscal year and the selected debt, and capital. It is the figure which displayed the graph which shows the state of the prediction value of the cash flow for every fiscal year of the selected enterprise.

Figure 19C is the figure which displayed the graph of the average case of fluctuation when predicting the state of the cash flow for every fiscal year of the selected enterprise in consideration of the range of fluctuation.

Figure 19D is the figure which displayed the graph of the bad case of the ranges of fluctuation when predicting the state of the cash flow for every fiscal year of the selected enterprise in consideration of the range of fluctuation.

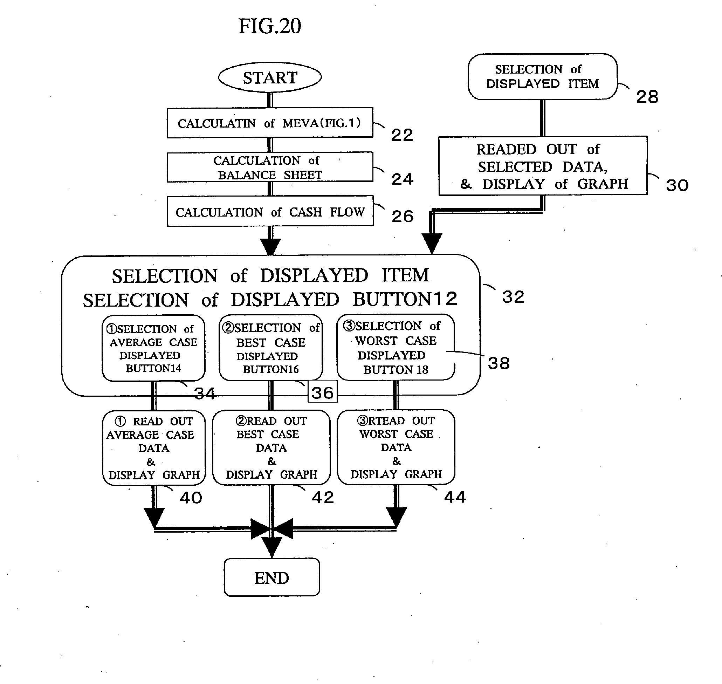

In the display screen shown in figure 19A, "t, t+1, t+2, - t+10" are the prediction values corresponding to "the 3rd term, the 4th term, and the - 7th term -" of Fig. 6. The contents of the property in each of these terms or {debt + capital} can be displayed on the display as a prediction result. In addition, although the first term of Fig. 6 and the second term correspond to t-2 and t-1, they are displayed neither in Fig. 19 nor Fig. 20. Since the time-axis displayed by operation of moving the time-axis of graph moves, t-2 and t-1 can be displayed also in Fig. 19 or Fig. 20.

Since a changed part joins future prediction, deflection width exists in the prediction value by which the simulation was carried out. When the portion of the good state of the domain of deflection width was chosen and it was shown in graph, and when the portion of a bad state is chosen, in the case where an average domain is chosen, the numerical values of a prediction value differ and the graph displayed differs.

In the display shown in Fig. 19 or Fig. 20, the operation area 12 has the function which chooses the portion of the good state of the domain of the above-mentioned deflection width, the portion of a bad state, and an average portion. Moreover, the present display value shows in which state of a prediction value, i.e., which portions of the portion of a good state, the portion of a bad state, and an average portion. Figure 19A and figure 19C Since ① Average 14 is chosen, displaying the graph of the average value of the deflection width of a simulation result is shown. With figure 19A or figure 19C Instead of ① Average 14, selection of ③ Worst 18 displays the graph based on the numerical value of the bad portion of the domain of the above-mentioned deflection width. They are figure 19B and figure 19C. If ② BEST 16 is chosen, the graph based on the numerical value of the good portion of the domain of the above-mentioned deflection width is displayed.

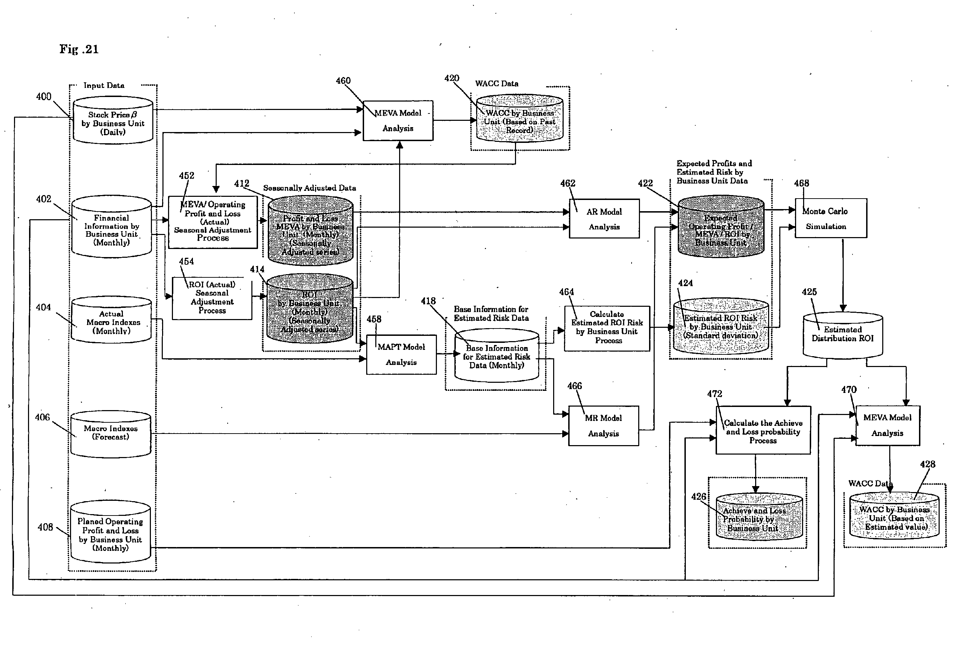

Fig. 20 is the flow chart of a system of operation, and MEVA, balance sheet, and cash flow are calculated at Steps 22-26, and it is kept by the memory. Next, if the contents which should be displayed on a display are chosen (for example, if the data of the data of Fig. 6, the data of figure 19 A/B, or figure 19 C/D is chosen) (Step 28), selected data will be read and it will indicate by graph (Step 30). At this time, the graph in ① Average mode is displayed as a typical display. For example, the graph of figure 19A or figure 19C is displayed. If the selection button 12 for a display is chosen at Step 32 and ② Vest mode (Step 36) and ③ Worst mode (Step 28) are chosen further, the graph in the selected mode will be expressed as Step 42 or Step 44. Moreover, if ① Average is chosen in the state of changing the mode for a display at Step 32 (Step 34), the graph in ① Average mode will be expressed as Step 40. These mode selections are already performed by selection of the operation buttons 14, 16, and 18 of the operation area 12 of above-mentioned figure 19 A-D. Fig. 21 is a system flowchart showing monthly performance and risk by business unit. The objectives are to manage the business portfolio and to issue alarm. Input data are as follows.

DB400 Database of Stock Price $\beta$ by business unit.
DB402 Database of financial information by business unit. Items are

· Invested Capital (debt + equity)
· Operating Profit

DB404 Database of actual macro indexes.
DB406 Database of forecasted macro indexes.
DB408 Database of planed profit by business unit.

Step454 seasonally adjusts monthly ROI (= Operating Profit / Invested Capital) by business unit in DB402. And seasonally adjusted data are stored in DB414. Stored data are

- Trend-cycle series (TC)
- Seasonally adjusted series(TC+I).

Step460 corresponds with Fig. 1. And this process calculates WACC by business unit. This process uses business risk (ROI distribution) that is calculated with the trend-cycle series of ROI in DB414. And it stores calculated WACC by business unit in DB420. (See Fig. 1's explanation for detail).

Step452 seasonally adjusts monthly MEVA (=Operating Profit - WACC X Invested Capital) and operating profit by business unit. This process uses WACC in DB420 and invested capital and operating profit by business unit in DB402 and stores each trend-cycle series into DB412.

Step458 uses MAPT analysis (depended variable: actual ROI, explanatory variable: fluctuations of macro index) and calculates each macro indexes exposure and specific ROI (not explained by macro indexes) by business unit. This step uses the seasonally adjusted series of ROI (TC + I) in DB414 and actual macro indexes in DB404. This process calculates $X_j$ and $\alpha + e_i$.

$$(ROI)_i = X_1 \cdot F_{1i} + X_2 \cdot F_{2i} + \cdots + X_n \cdot F_{ni} + \alpha + e_i$$

where $(ROI)_i$ is seasonally adjusted ROI at time i, $F_{ji}$ is fluctuation in actual j macro index at time i, $\underline{X_j}$ is j macro index exposure and $\alpha + e_i$ is Specific ROI

And this process calculates the covariance matrix among the macro indexes.

$$COV_{ij} = COV(F_i, F_j)$$

where $COV_{ij}$ is (i, j)-component of covariance matrix, $COV(F_i, F_j)$ is covariance between fluctuations of i macro index and j macro index.

Calculated value is stored in DB418 as "Base Information for Estimated Risk Data".

Step462 uses AR analysis and estimates the expected operating profit and the expected MEVA and the expected ROI by business unit. This process uses operating profit, MEVA and trend-cycle of actual operating profit in DB412, and trend-cycle of actual ROI in DB414. The estimated value is stored in DB422.

Step464 calculates the estimated ROI risk by business unit using the "Base Information for Estimated Risk Data". Calculation method is as follows.

$$Var(ROI) = X_1 \cdot X_1 \cdot Var(F_1) + \cdots + X_n \cdot X_n \cdot Var(F_n) + 2 \cdot X_1 \cdot X_2 \cdot COV(F_1 \cdot$$

$$F_2) + \cdots$$

$$+ 2 \cdot X_{n-1} \cdot X_n \cdot COV(F_{n-1} \cdot F_n) + Var(\alpha + ei)$$

where $Var(Fi)$ is variance of fluctuations in i macro index, $Var(\alpha + ej)$ is variance of Specific ROI. Estimated value is stored in DB424.

Step466 estimates expected ROI using MR analysis. This step uses each macro indexes exposure by business unit in DB418 and forecast of each macro indexes in DB406.

$$\text{Expected ROI} = X_1 \cdot \dot{F}_1 + X_2 \cdot \dot{F}_2 + \cdots + X_n \cdot \dot{F}_n + \alpha$$

where $\dot{F}_j$ is forecasted fluctuation in j macro index. Estimated value is stored in DB422.

Step468 calculates the estimated ROI distribution using Monte Carlo simulation. This step uses the estimated ROI risk in DB424 and the expected ROI, the expected operating profit and the expected MEVA in DB422. Estimated ROI distribution is stored in DB425.

Step470 corresponds with Fig. 1. This step calculates WACC by business unit using estimated ROI distribution in DB425. (See Fig. 1's explanation for detail)

Step 472 calculates the achieve probability (*) and the loss probability. This step uses the planed operating profit and loss by business unit in DB408 and invested capital by business unit in DB402. Calculated values are stored in DB426.

(* The achieve probability means the probability that profit surpasses the plane.)

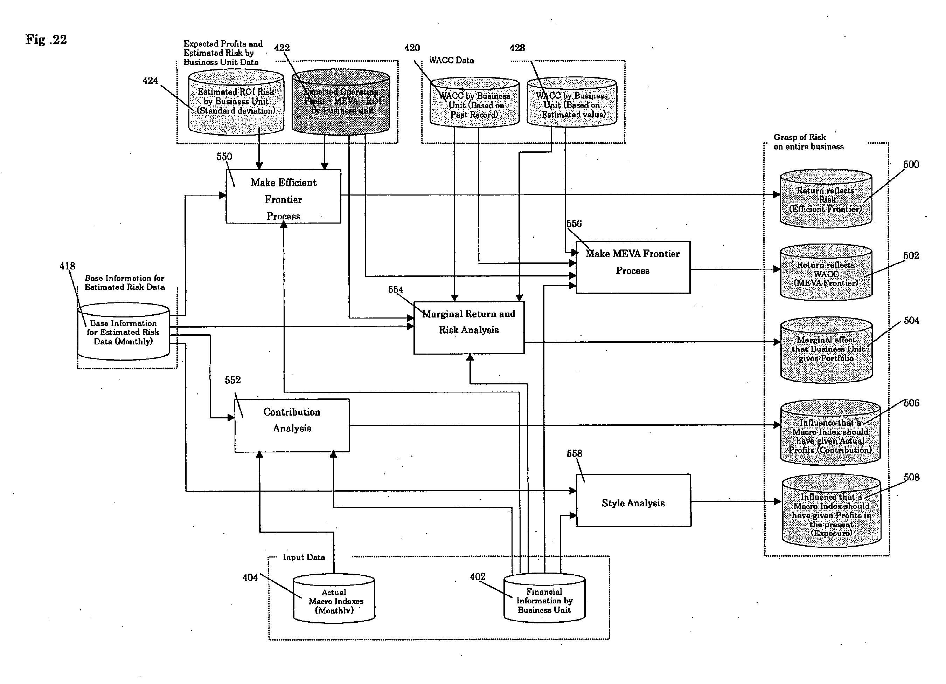

Fig. 22 is the system flowchart showing monthly performance and risk on entire business. The objects are to manage to business portfolio and issue alarm. Input data are as follows.

· DB402 Database of financial information by business unit
· DB404 Database of actual Macro Indexes.
· DB418 Database of Base Information for Estimated Risk Data(Monthly)
· DB422 Database of Expected operation profit and MEVA and ROI by business unit.
· DB420 WACC by business unit(based on past record)
· DB428 WACC by business unit(based on estimated value)
· DB424 Estimated ROI risk by business unit(standard deviation)

Each database appears in Fig. 21.

Step550 makes efficient frontier with expected ROI and estimated ROI risk. This step uses expected ROI by business unit in DB418 and Base Information for Estimated Risk Data in DB 418. And this step uses estimated ROI risk by business unit in DB424 and invested capital by business unit in DB406, and draws the present business portfolio position and each business unit position in a graph. The point of efficient frontier (expected ROI and estimated ROI risk's plot) and the point of present business portfolio position and the point of business unit position are stored in DB500.

Step552 calculates influence that a macro index should have given on actual ROI (or profit) of entire business. This step uses each macro indexes exposure by business unit in DB418, actual macro indexes in DB404 and invested capital by business unit in DB406. Each macro indexes exposure by business unit and contribution value (=macro index exposure × fluctuations of macro index) are stored in DB506 as monthly.

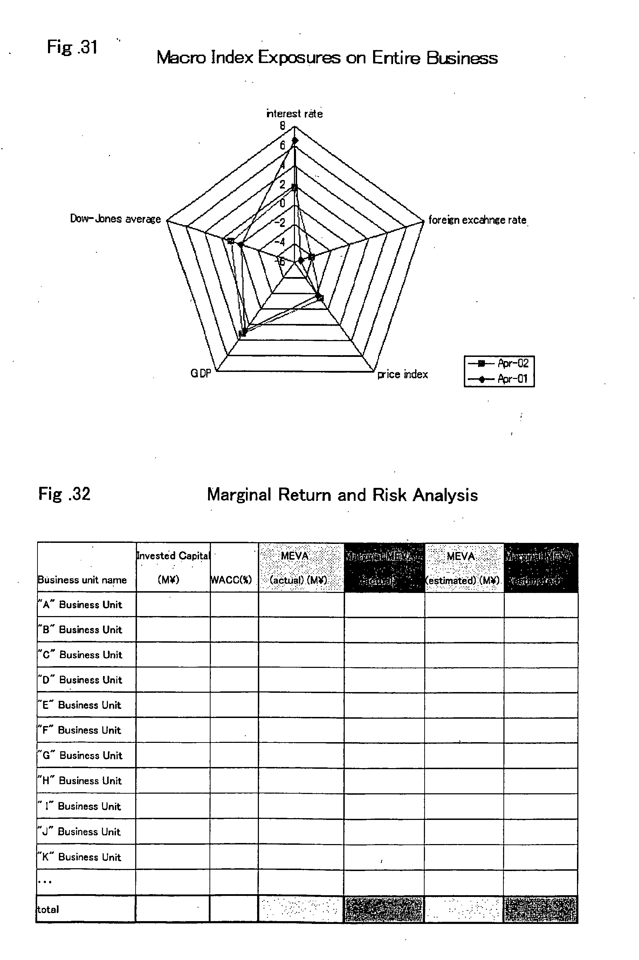

Step554 calculates marginal influence that each business gives portfolio (marginal MEVA). This step uses actual operating profit and invested capital by business unit in DB402, WACC based on past record in DB420, WACC based on estimated value in DB428, expected operating profit and expected MEVA in DB422. Calculated value is stored in DB504. (See Fig. 32's explanation for detail).

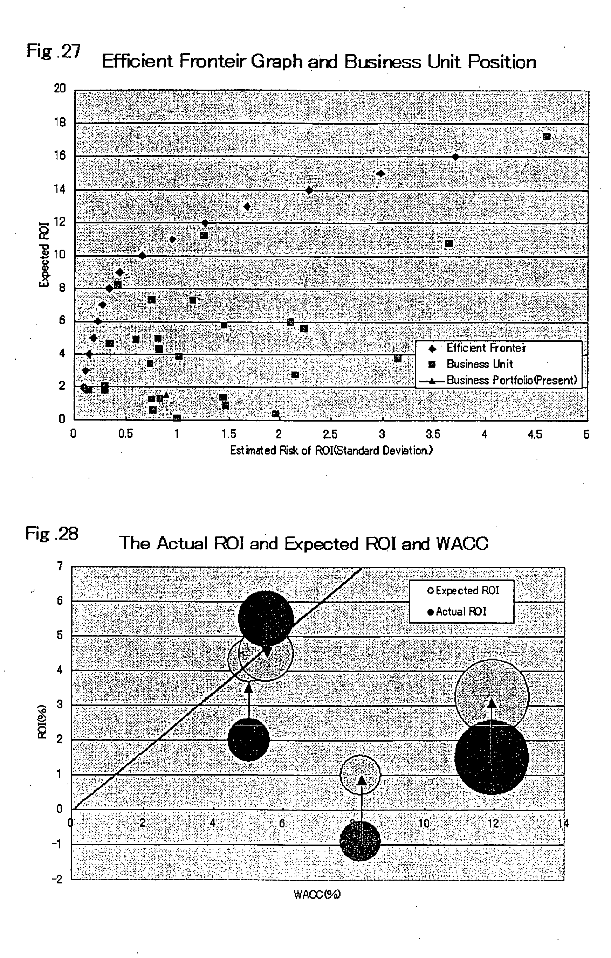

Step556 makes MEVA Frontier. This step uses WACC based on past record in DB420, WACC based on estimated value in DB428 , expected ROI by business unit in DB422 and actual ROI by business unit in DB402. Calculated value is stored in DB502. (See Fig. 28's explanation for detail).

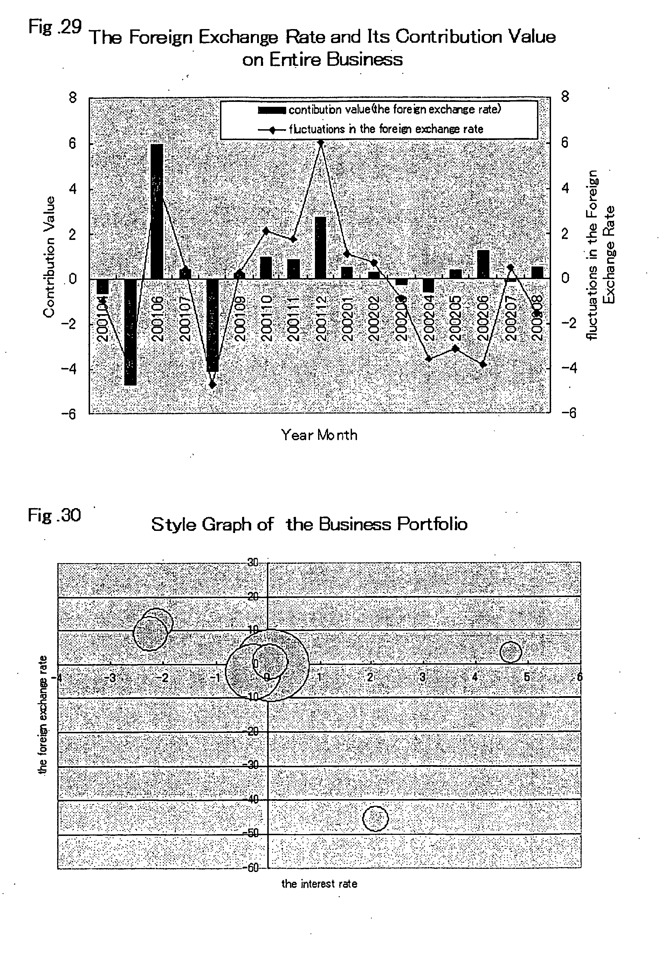

Step558 analyzes style of business portfolio. This process uses each macro indexes exposure by business unit in DB418 and invested capital by business unit in DB402. Calculated value is stored in DB508. (See Fig. 30, 31's explanation for detail).

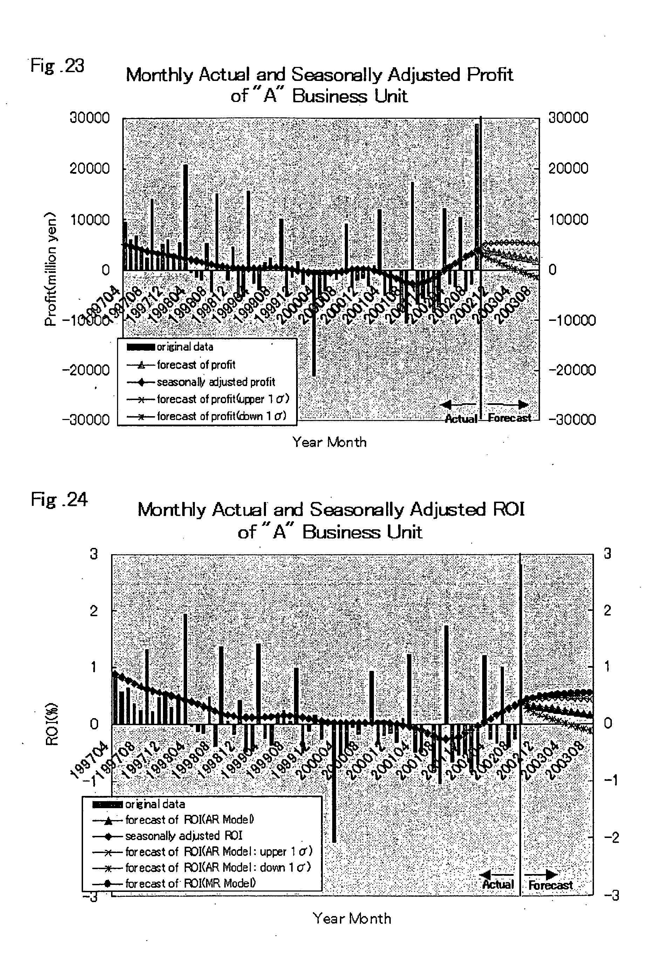

Fig. 23 shows a line graph and a bar graph. In this graph, horizontal axis is Year Month, vertical axis is operating profit. A bar graph is monthly operating profit of "A" business unit. A line graph is seasonally adjusted operating profit of "A" business unit. Input data is actual operating profit in DB402 of Fig. 21 and trend-cycle of operating profit (TC) in DB412 of Fig. 21. A line graph (trend-cycle of operating profit) contributes to see trend of operating profit for long term because actual operating profit usually has big fluctuations. This graph also contains expected operating profit and its risk that is estimated by AR Analysis in DB422. So it is possible to see the fluctuations of operating profit in the future.

Fig .24 shows a line graph and a bar graph. In this graph, horizontal axis is Year Month; vertical axis is ROI (%). A bar graph is monthly actual ROI. A line graph is trend-cycle of actual ROI. Input data is actual ROI (= Operating Profit / Invested Capital) in DB402 of Fig. 21 and trend-cycle of ROI (TC) in DB414 of Fig. 21. A line graph (trend-cycle of ROI) contributes to see the trend of ROI for long term because actual ROI usually has big fluctuations. This graph also contains expected ROI and its risk that is estimated by AR Analysis and MR Analysis in DB422. So it is possible to see the fluctuations of ROI in the future and to compare different estimated method: AR analysis and MR analysis.

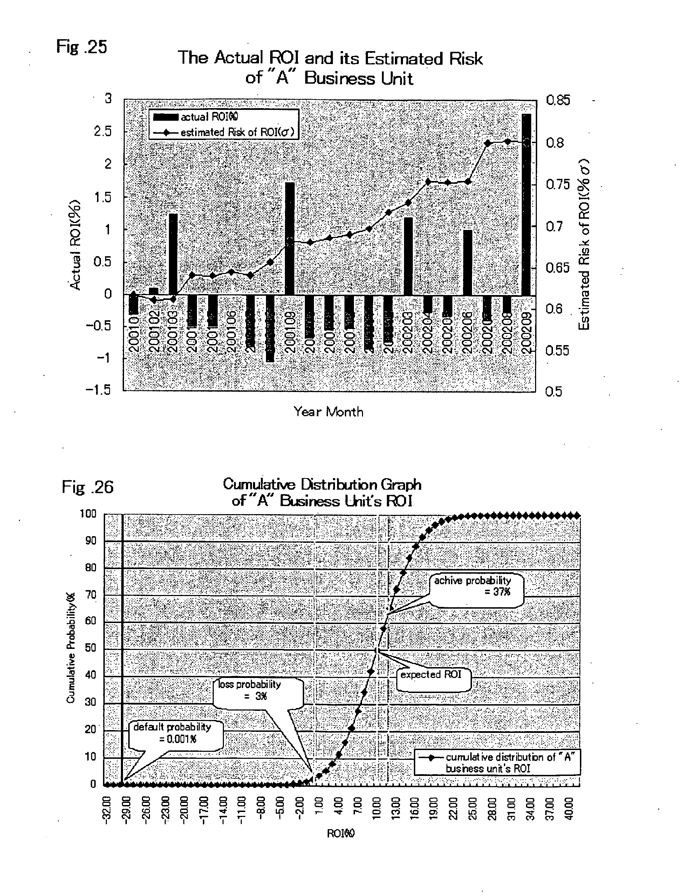

Fig. 25 shows a line graph and a bar graph. In this graph, horizontal axis is Year Month; left vertical axis is actual ROI (%); right vertical axis is estimated ROI risk (standard deviation %). A bar graph is monthly actual ROI. A line graph is estimated ROI risk. Input data is actual ROI (= Operating Profit / Invested Capital) in DB402 of Fig. 21 and estimated ROI risk by business unit in DB424 of Fig. 21. Estimated risk gain and loss is compared to actual ROI in this graph. It makes possible to check an estimated risk and to take the preaction for mounting estimated risk.

Fig. 26 shows a line graph and points of three probabilities. In this graph, horizontal axis is ROI (%); vertical axis is cumulative probability (%). A line graph is cumulative distribution graph of "A" business unit's ROI. Three points are achieve probability, default probability and loss probability. Input data are the achieve probability and the loss probability by business unit in DB 426 of Fig. 21. To get grasps of various risk at a time is possible, because this graph contains various probabilities.

Fig. 27 is a graph showing efficient frontier of business portfolio's ROI. In this graph, horizontal axis is estimated risk of ROI (standard deviation %); vertical axis is expected ROI (%). Input data is efficient frontier data in DB500 of Fig. 22. This graph is indicator of business portfolio's rearrangement, because it is possible to compare each business unit positions, present portfolio position and theoretically optimal business portfolio position in this graph.

Fig. 28 is a graph showing a bubble chart. In this graph, horizontal axis is WACC (%); vertical axis is ROI (%); bubble size is invested capital. Input data is MEVA Frontier data in DB502 of Fig. 22. This graph expresses relationship WACC and ROI. It is possible to check on an appropriate WACC, because we can compare expected ROI, actual ROI and WACC in this graph.

Fig. 29 shows a bar graph of contribution value (macro index exposure $\times$ fluctuations in macro index) and a line graph of fluctuations in macro index. In this graph, left vertical axis is contribution value for ROI; right vertical axis is fluctuations in macro index; horizontal axis is Year Month. Input data is contribution data in DB506 of Fig. 22. This graph gives important indicator on past analysis that how large fluctuations in macro index should have contributed fluctuations in ROI on entire business.

Fig. 30 is a graph showing a bubble chart. In this graph, vertical axis is "A" macro index exposure; horizontal axis is "B" macro index exposure; bubble size is invested capital. Input data is exposure data in DB508 of Fig. 22. It makes possible the present analysis of the business portfolio style: macro index exposure by business unit and invested capital in one graph.

Fig. 31 is graph showing a radar chart. In this graph, items are macro index's names and values are macro index exposures. This graph has two radar lines at different time point. Input data is exposure data in DB508 of Fig. 22. It is possible to get a grasp of style of different time by comparing between different point's macro index exposures in this graph.

Fig. 32 is a table showing MEVA based on past record, MEVA based on forecast of operating profit and marginal influence that business unit gives portfolio. Input data is DB504 of Fig .22. This table contributes to compare different business unit, because it is on the same table. And it is possible to get information for purpose of constructing efficient business portfolio.

As described in the foregoing, the business performance index processing system according to the present invention can accomplish the following task. Namely, it provides business performance indices that relate to the management of performance evaluation, incorporate a risk (uncertainty) evaluation in the investment and withdrawal guidelines, appropriately create a business portfolio (selection and concentration), make the invested capital-to-debt composition (financing) appropriate, and eventually bring a sustainable growth to . the company in harmony with the society.

Furthermore, according to the calculation system of the present invention, it is possible to vitalize operations within a company, determine investment or withdrawal for each business unit to concentrate on specific areas of businesses, ensure optimum corporate finance, and thereby allow the company to maintain the sustainable growth in harmony with the society.

**Claims**

1. A business performance index processing system, comprising:

    a computer that performs calculations for obtaining, based on a probability distribution of a ratio of the value of profit to an investment amount, a capital composition (debt/equity ratio) that satisfies a predetermined default probability, a weighted average cost of capital based on the capital composition, a borrowing cost, and an equity cost, and market efficiency value added (MEVA), from the weighted average cost of capital based on a net operating profit after tax; and
    a display device that, based on the results of these calculations, gives a display of data created relating to MEVA.

2. The business performance index processing system according to claim 1, wherein, the display device displays a forecast value for each of fiscal years making up an entire period subjected to calculation relating to MEVA.

3. The business performance index processing system according to claim 1, wherein, the display device displays a cumulative value of a forecast value for each of fiscal years making up an entire period subjected to calculation relating to MEVA.

4. The business performance index processing system according to claim 1, wherein, the display device displays a forecast value for each of fiscal years making up an entire period subjected to calculation relating to MEVA, and a cumulative value of the forecast value for each of fiscal years making up the entire period subjected to calculation relating to MEVA, with said forecast value compared with said cumulative value.

**5.** The business performance index processing system according to claim 1, wherein, the display device displays a forecast value for each of fiscal years making up an entire period subjected to calculation relating to MEVA, and a record value for each of fiscal years making up the entire period subjected to calculation relating to MEVA, with said forecast value compared with said record value.

**6.** The business performance index processing system according to claim 1, wherein, the display device displays a cumulative value of a forecast value for each of fiscal years making up an entire period subjected to calculation relating to MEVA, and a cumulative value of a record value for each of fiscal years making up the entire period subjected to calculation relating to MEVA, with said cumulative value of the forecast value compared with said cumulative value of the record value.

**7.** The business performance index processing system according to claim 1, wherein, the-display device displays a plurality of business plans under way on a screen thereof relating to MEVA.

**8.** The business performance index processing system according to claim 1, wherein, the display device displays data relating to MEVA on a semi-annual, quarterly, or monthly basis for an entire period subjected to calculation.

**9.** The business performance index processing system according to claim 3, wherein, the display device displays the cumulative value relating to MEVA as discounted using a cost of capital or a risk-free rate.

**10.** The business performance index processing system according to claim 3, wherein, the display device displays, relating to MEVA, a forecast value for each of an invested capital, sales, a profit after tax, a weighted average cost of capital, and a MEVA for each of fiscal years making up the entire period subjected to calculation in comparison with one another, with each item compared with one another, as calculated from the calculated MEVA.

**11.** The business performance index processing system according to claim 10, wherein, a forecast value, a record value, and a difference between these two values, are displayed for each of the invested capital, sales, profit after tax, weighted average cost of capital, and MEVA.

**12.** The business performance index processing system according to claim 11, wherein, the record value displayed for each of the invested capital, sales, profit after tax, weighted average cost of capital, and MEVA is replaced, after evaluation, by a forecast value as obtained by reviewing the same based on the record value immediately near the evaluation point.

**13.** The business performance index processing system according to claim 1, wherein, the display device displays, relating to MEVA, in a graph a probability distribution of a net operating profit after tax based on MEVA calculated for each investment plan.

**14.** The business performance index processing system according to claim 1, wherein, the display device displays data relating to MEVA for each business unit or for an entire enterprise.

**15.** The business performance index processing system according to claim 14, wherein, the display device displays, relating to MEVA, an invested capital, sales, a profit after tax, a cost of capital, a MEVA, a stockholders' equity, an internal capital, and a difference in capital for each business, based on MEVA calculated for all businesses.

**16.** The business performance index processing system according to claim 15, wherein, the invested capital, the sales, the profit after tax, the cost of capital, the MEVA, the stockholders' equity, the internal capital, and the difference in capital for each business are displayed in terms of a simple addition of each of these items and an addition taken with correlation among different businesses taken into consideration, with said additions compared with each other.

**17.** The business performance index processing system according to claim 16, wherein, the display device displays, relating to MEVA, a graph representing the calculated MEVA in relation to an invested capital for all businesses subjected to calculation, said graph being displayed with each business item connected to each other.

**18.** The business performance index processing system according to claim 1, wherein, the display device displays, relating to MEVA, risk-return data calculated based on MEVA calculated for all businesses and an effective frontier induced therefrom.

**19.** The business performance index processing system according to claim 1, wherein, the display device displays, relating to MEVA, MEVA calculated for each business unit together with an effect (with correlation taken into consideration) of a specific business unit in question on MEVA of an entire enterprise.

**20.** The business performance index processing system according to claim 1, wherein, the display device displays, relating to MEVA, an accumulated discounted value of MEVA calculated for each business unit and an effect on MEVA of an entire enterprise (Marginal Accumulated Discounted-MEVA) shown in an at-a-glance table format.

**21.** A system for processing business performance index using a computer, comprising:

a storage device having therein a file that stores therein information relating to credit rating and default probability, a file that stores therein information relating to stock prices, a file that stores therein information relating to a ratio of a value of profit to an invested capital (ROI), and a file that stores therein information relating to a profit after tax;

an input unit with which information to be stored in any of these files is input or a command for inputting of the information is issued;

a processing unit that performs the calculations, in relation to the information stored in these files, for obtaining a required capital composition (an optimum debt/equity ratio) of an invested capital based on a probability distribution of a return on investment, obtaining a weighted average cost of capital based on the capital composition, a borrowing cost, and an equity cost, and obtaining a market efficiency value added (MEVA) from the weighted average cost of capital and a net operating profit after tax; and

a display device that displays data created relating to MEVA based on a result of processing performed by the processing unit.

**22.** The business performance index processing system according to claim 21, wherein, the display device displays a forecast value for each predetermined segment of an entire period of calculation concerning MEVA or information relating to accumulation of the forecast values.

# FIG. 1

100 — SET TARGET RATING

110 — CALCULATE BUSINESS RISK

106 — CALCULATE EQUITY RISK $\beta$ BASED ON VOLATILITY OF STOCK PRICE

102 — CALCULATE DEFAULT PROBABILITY

112 — CALCULATE REQUIRED CAPITAL COMPOSITION (OPTIMUM DEBT/ EQUITY RATIO)
(D/E)

108 — CALCULATE EQUITY COST
(Re)

104 — CALCULATE BORROWING COST
(Rd)

114 — CALCULATE WEIGHTED AVERAGE COST OF CAPITAL

120 — TANGIBLE INDEX

122 — CALCULATE MARKET EFFICIENCY VALUE ADDED (MEVA)

# FIG. 2

# FIG. 3

| RATING | DEFAULT PROBABILITY | BORROWING COST |
|--------|--------------------|----------------|
| AAA | 0.001% | 1.5% |
| AA | 0.01% | 1.6% |
| A | 0.1% | 1.7% |
| BBB | 0.3% | 2.2% |
| BB | 3% | 6% |
| B | 15% | 20% |
| C | 30% | % |

# FIG. 4

# FIG. 5

# FIG. 6

(EVALUATION
REFERENCE POINT)    (DISCOUNT RATE)    (BEING DISPLAYED)

| 2ND TERM | RISK-FREE RATE | BUSINESS UNIT A |

(BILLION YEN)

☐ MEVA CUMULATIVE VALUE (FORECAST)
◆ SINGLE FISCAL YEAR MEVA (FORECAST)
▨ MEVA CUMULATIVE VALUE (RECORD)
▦ MEVA CUMULATIVE VALUE
  (REVIEWED FORECAST)

1ST PERIOD    2ND PERIOD    3RD PERIOD    4TH PERIOD    5TH PERIOD    6TH PERIOD    7TH PERIOD

A          B          C

NEXT

EP 1 316 906 A1

# FIG. 7

| | | 1ST PERIOD | 2ND PERIOD | 3RD PERIOD | 4TH PERIOD | 5TH PERIOD | 6TH PERIOD | 7TH PERIOD |
|---|---|---|---|---|---|---|---|---|
| INVESTED CAPITAL | FORECAST | 100 | 110 | 120 | 130 | 140 | 150 | 160 |
| | RECORD | 105 | 105 | 125 | 135 | 145 | 155 | 165 |
| | DIFFERENCE | 5 | −5 | 5 | 5 | 5 | 5 | 5 |
| SALES | FORECAST | 50 | 80 | 120 | 170 | 230 | 300 | 380 |
| | RECORD | 50 | 90 | 121 | 173 | 233 | 305 | 386 |
| | DIFFERENCE | 0 | 10 | 1 | 3 | 3 | 4 | 6 |
| PROFIT AFTER TAX | FORECAST | −40 | −20 | 0 | 25 | 60 | 90 | 120 |
| | RECORD | −35 | −10 | 0 | 26 | 62 | 93 | 124 |
| | DIFFERENCE | 5 | 10 | 0 | 1 | 2 | 3 | 4 |
| WEIGHTED AVERAGE COST OF CAPITAL | FORECAST | 10.0% | 10.0% | 10.0% | 10.0% | 10.0% | 10.0% | 10.0% |
| | RECORD | 9.0% | 9.0% | 90% | 9.0% | 9.0% | 9.0% | 9.0% |
| | DIFFERENCE | −1.0% | −1.0% | −1.0% | −1.0% | −1.0% | −1.0% | −1.0% |
| MEVA | FORECAST | −50 | −30 | −20 | 5 | 40 | 70 | 100 |
| | RECORD | −40 | −20 | −15 | 10 | 45 | 75 | 105 |
| | DIFFERENCE | −10 | 10 | 5 | 5 | 5 | 5 | 5 |

EVALUATION POINT

REVIEWED FORECAST IS DISPLAYED, IF ONE IS AVAILABLE.
IF NOT, ORIGINAL FORECAST IS DISPLAYED

BACK  NEXT

EP 1 316 906 A1

# FIG. 8

| RATING | DEFAULT PROBABILITY |
|--------|---------------------|
| AAA | 0.00% |
| AA | 0.001% |
| A | 0.01% |
| | |

BUSINESS UNIT A

ONE VALUE
OF STANDARD
DEVIATION

STOCKHOLDERS'
EQUITY

0  PROFIT AFTER TAX (EXPECTED)

TARGET
RATING

PROBABILITY OF PROFIT AFTER
TAX BEING IN THE POSITIVE

BACK    NEXT    QUIT

EP 1 316 906 A1

## FIG. 9

| BUSINESS UNIT (TO BE INVESTED) | INVESTED CAPITAL | SALES | PROFIT AFTER TAX | | | COST OF CAPITAL | | MEVA | REQUIRED STOCKHOLDERS' EQUITY | INTERNAL CAPITAL | DIFFERENCE |
|---|---|---|---|---|---|---|---|---|---|---|---|
| | | | (VALUE) | VOLATILITY | PROBABILITY OF BLACK FIGURE | (VALUE) | WACC | | | | |
| BUSINESS A | X BILLION YEN | X BILLION YEN | X BILLION YEN | X BILLION YEN | X % | X BILLION YEN | X % | X BILLION YEN | X BILLION YEN | X BILLION YEN | X BILLION YEN |
| BUSINESS B | · | · | · | · | · | · | · | · | · | · | · |
| BUSINESS C | · | · | · | · | · | · | · | · | · | · | · |
| · | · | · | · | · | · | · | · | · | · | · | · |
| · | · | · | · | · | · | · | · | · | · | · | · |
| · | · | · | · | · | · | · | · | · | · | · | · |
| NEW BUSINESS | X BILLION YEN | X BILLION YEN | X BILLION YEN | X BILLION YEN | X % | X BILLION YEN | X % | X BILLION YEN | X BILLION YEN | X BILLION YEN | X BILLION YEN |
| TOTAL OF ALL BUSINESSES (SIMPLE AGGREGATE) | | | | | | | | | | | |
| TOTAL OF ALL BUSINESSES (WITH CORRELATION CONSIDERED) | | | | | | | | | | | |

RECALCULATION BUTTON

BACK    NEXT

EP 1 316 906 A1

# FIG. 10

SINGLE FISCAL
YEAR MEVA
(CUMULATIVE MEVA)

ALL BUSINESS
UNITS

d

BUSINESS D

BUSINESS E

c

BUSINESS C

BUSINESS F

BUSINESS B

b

e

a

f

BUSINESS A

BUSINESS G

INVESTED CAPITAL
(AVERAGE BALANCE)

g

BACK    NEXT

EP 1 316 906 A1

# FIG. 11

RETURN=PROFIT AFTER
TAX/INVESTED CAPITAL

BUSINESS F

BUSINESS D

TOTAL OF ALL
BUSINESSES

BUSINESS E

BUSINESS B          BUSINESS C

BUSINESS A

RISK=PROFIT AFTER TAX/INVESTED CAPITAL (AVERAGE BALANCE)

RECALCULATION   BACK   NEXT

# FIG. 12(A)

```
POINTING TO TOTAL OF ALL BUSINESSES
WILL SHOW DATA FOR EACH INDIVIDUAL
BUSINESS FIELD
                 RETURN      RISK
BUSINESS A       OO %        OO %
BUSINESS B       OO %        OO %
```

# FIG. 12(B)

```
POINTING TO EACH BUSINESS WILL SHOW THE
FOLLOWING
 RETURN: OO % (RANKING AMONG ALL BUSINESSES)
 RISK: OO % (RANKING AMONG ALL BUSINESSES)
 CONTRIBUTION (RETURN/RISK RANKING)
```

# FIG. 13

PERCENTAGE DISTRIBUTION OF
BUSINESSES ON EFFECTIVE FRONTIER

PERCENTAGE DISTRIBUTION OF BUSINESSES

BUSINESS A

BUSINESS B

BUSINESS C

BUSINESS D

BUSINESS E

RETURN (ROI)

BACK    NEXT    QUIT

EP 1 316 906 A1

*FIG. 14*

**EFFECTS ON ALL BUSINESSES (SINGLE FISCAL YEAR, CUMULATIVE)**

45-DEGREE LINE

BUSINESS A

BUSINESS B ●

BUSINESS E

BUSINESS C

BUSINESS D

BUSINESS F

**MARKET EFFICIENCY VALUE ADDED (SINGLE FISCAL YEAR, CUMULATIVE)**

BACK    NEXT

EP 1 316 906 A1

# FIG. 15

| | MEVA | NET OPERATING PROFIT AFTER TAX | MARGINAL EFFECT | |
|---|---|---|---|---|
| | (SINGLE FISCAL YEAR, CUMULATIVE) | VOLATILITY | MEVA | VOLATILITY |
| BUSINESS A | 3 BILLION YEN | 0.5 BILLION YEN | · | · |
| BUSINESS B | 2 BILLION YEN | 0.7 BILLION YEN | · | · |
| BUSINESS C | 1 BILLION YEN | 1 BILLION YEN | · | · |
| BUSINESS D | · | · | 0.5 BILLION YEN | 0.3 BILLION YEN |
| | · | · | · | · |
| | · | · | · | · |
| | · | · | · | · |
| TOTAL OF ALL BUSINESSES | 5.5 BILLION YEN | 0.8 BILLION YEN | 6 BILLION YEN | 0.6 BILLION YEN |

BACK    QUIT

## FIG. 16

SYSTEM CONFIGURATION DIAGRAM

170 — INPUT UNIT

172 — OUTPUT UNIT (DISPLAY DEVICE, PRINTER)

174 — PROCESSING UNIT

176 — TEMPORARY STORAGE UNIT

178 — TRANSMITTER/ RECEIVER UNIT

TO PUBLIC NETWORK

DATA FILE: DATA OF TABLE SHOWN IN FIG. 3 — 180

DATA FILE: STOCK PRICE DATA — 182

DATA FILE (DATA OF FIG. 2) — 184

DATA FILE: ROI — 186

DATA FILE: BUSINESS MANAGEMENT DATA (PROFIT AFTER TAX) — 188

191

EP 1 316 906 A1

# FIG. 17

## (DETAILED FLOW OF FIG. 1)

100

START

302
READ TABLE OF FIG. 3 FROM DATA FILE AND DISPLAY IT ON OUTPUT UNIT 172

304
INPUT TARGET CREDIT RATING (RETAINED IN TEMPORARY STORAGE UNIT 176)

102
CALCULATE DEFAULT PROBABILITY FROM DATA ON TABLE OF FIG. 3 (RETAINED IN TEMPORARY STORAGE UNIT 176)

104
CALCULATE BORROWING COST FROM DATA ON TABLE OF FIG. 3 (RETAINED IN TEMPORARY STORAGE UNIT 176)

# FIG. 18

(DETAILED PROCESSING FLOW OF FIG. 1)

( START )

**106**

RECEIVE VOLATILITY OF PAST TOKYO STOCK PRICES AND THAT OF STOCK PRICES TO BE EVALUATED FROM EXTERNAL DB — 312

CREATE AND DISPLAY DISTRIBUTION GRAPH OF FIG. 4. DISPLAY $\beta$ VALUE ON GRAPH — 314

VALIDATE $\beta$ VALUE BY OPERATING RETURN KEY ON DISPLAY SCREEN (OR BUY DISCLOSED INFORMATION) SO AS TO STORE IT IN TEMPORARY STORAGE UNIT 176 — 316

**108**

INPUT Rf — 318

CALCULATE EQUITY COST (Re) (EQUATION 7) — 320

PERFORM CALCULATION PROCESS OF PROBABILITY FREQUENCY OF ROI SHOWN IN OF FIG. 2 AND CREATE GRAPH OF FIG.2 (DETAILED FLOW TO BE DESCRIBED LATER) — 110

**112**

INPUT SETTING VALUE OF DEFAULT PROBABILITY OF ENTERPRISE TO BE EVALUATED — 322

CALCULATE REQUIRED CAPITAL COMPOSITION BASED ON RESULTS OF CALCULATION PERFORMED IN STEP 110 — 324

CALCULATE WEIGHTED AVERAGE COST OF CAPITAL USING EQUATION 5 — 114

INPUT PROFIT AFTER TAX OR USE PEAK VALUE OF FIG. 2 — 120

MEVA CALCULATION, EQUATIONS (8), (9), (10), (11) — 122

FIGS. 6 THROUGH 15 — 330

EP 1 316 906 A1

Fig. 19A

| ITEM | ③ Worst Case | 18 |
| ④ Best Case | 16 |
| ① Average Case | 14 |

12

**BALANCE SHEET**

PLAN  PREDICTION

CURRENT ASSETS

FIXED PROPERTY

SHORT TERM DEBT

LONG TERM DEBT

SELF CAPITAL

PROPERTY

DEPT+CAPITAL

t    t+1    t+2    t+3    t+4    t+10

PLAN   PREDICTION

CURRENT ASSETS

FIXED PROPERTY

SHORT TERM DEBT

LONG TERM DEBT

SELF CAPITAL

FIG.19B

ITEM | ③ Worst Case | 18
② Best Case | 16
① Average Case | 14
| 12

PLAN  REDICTION
CURRENT ASSETS
FIXED PROPERTY
SHORT TERM DEBT
LONG TERM DEBT
SELF CAPITAL

BALANCE SHEET

t    t+1    t+2    t+3    t+4    t+10

PLAN  PREDICTION

PROPERTY

CURRENT ASSETS

FIXED PROPERTY

DEPT+CAPITAL

SHORT TERM DEBT

LONG TERM DEBT

SELF CAPITAL

CAPITAL INCREASE

EP 1 316 906 A1

FIG.19C

ITEM | ③ Worst Case — 18
② Best Case — 16
① Average Case — 14
12

PLAN PREDICTION

FINANCE ACTIVITY

INVESTMENT ACTIVITY

BUSINESS ACTIVITY

CASH FLOW

t  t+1  t+2  t+3  t+4  t+10

PLAN PREDICTION

FINANCE ACTIVITY

CASH IN

INVESTMENT ACTIVITY

CASH OUT

BUSINESS ACTIVITY

EP 1 316 906 A1

PLAN PREDICTION

FINANCE ACTIVITY

INVESTMENT ACTIVITY

BUSINESS ACTIVITY

FINANCIAL DEFICIT
(ADDITIONAL FINANCE)

FIG.19D

EP 1 316 906 A1

ITEM | ③ Worst Case | 18
②  Best Case | 16
① Average Case | 14

12

CASH FLOW

t    t+1    t+2    t+3    t+4    t+10

PLAN PREDICTION

CASH IN

FINANCE ACTIVITY

CASH OUT

INVESTMENT ACTIVITY

BUSINESS ACTIVITY

## FIG.20

START

CALCULATIN of MEVA(FIG.1) — 22

CALCULATION of
BALANCE SHEET — 24

CALCULATION of CASH FLOW — 26

SELECTION of
DISPLAYED ITEM — 28

READED OUT of
SELECTED DATA,
& DISPLAY of GRAPH — 30

SELECTION of DISPLAYED ITEM
SELECTION of DISPLAYED BUTTON12 — 32

①SELECTION of
AVERAGE CASE
DISPLAYED
BUTTON14

②SELECTION of
BEST CASE
DISPLAYED
BUTTON16

③SELECTION of
WORST CASE
DISPLAYED
BUTTON 18 — 38

34 36

① READ OUT
AVERAGE CASE
DATA
&
DISPLAY GRAPH

②READ OUT
BEST CASE
DATA
&
DISPLAY GRAPH

③RTEAD OUT
WORST CASE
DATA
&
DISPLAY GRAPH

40 42 44

END

EP 1 316 906 A1

Fig .21

Fig .22

Expected Profits and
Estimated Risk by
Business Unit Data

422

420

428

WACC Data

424

Estimated ROI Risk
by Business Unit
(Standard deviation)

Expected Operating
Profit - MEVA - ROI
by Business unit

WACC by Business
Unit (Based on
Past Record)

WACC by Business
Unit (Based on
Estimated value)

Grasp of Risk
on entire business

500

550

Make Efficient
Frontier
Process

Return reflects
Risk
(Efficient Frontier)

556

502

Make MEVA Frontier
Process

Return reflects
WACC
(MEVA Frontier)

418

Base Information for
Estimated Risk Data

554

504

Base Information
for Estimated Risk
Data (Monthly)

Marginal Return and
Risk Analysis

Marginal effect
that Business Unit
gives Portfolio

552

506

Contribution
Analysis

Influence that a
Macro Index should
have given Actual
Profits (Contribution)

558

508

Style Analysis

Influence that a
Macro Index should
have given Profits in
the present
(Exposure)

Input Data

404

402

Actual
Macro Indexes
(Monthly)

Financial
Information by
Business Unit

38

EP 1 316 906 A1

Fig .23

## Monthly Actual and Seasonally Adjusted Profit of "A" Business Unit

Year Month

Fig .24

## Monthly Actual and Seasonally Adjusted ROI of "A" Business Unit

Year Month

Fig .25

**The Actual ROI and its Estimated Risk of "A" Business Unit**

Year Month

Fig .26

**Cumulative Distribution Graph of "A" Business Unit's ROI**

ROI(%)

Fig .27    Efficient Fronteir Graph and Business Unit Position

Fig .28    The Actual ROI and Expected ROI and WACC

Fig .29 **The Foreign Exchange Rate and Its Contribution Value on Entire Business**

Fig .30 **Style Graph of the Business Portfolio**

## Fig .31

### Macro Index Exposures on Entire Business

## Fig .32

### Marginal Return and Risk Analysis

| Business unit name | Invested Capital (M¥) | WACC(%) | MEVA (actual) (M¥) | Marginal MEVA (actual) | MEVA (estimated) (M¥) | Marginal MEVA (estimated) |
|---|---|---|---|---|---|---|
| "A" Business Unit | | | | | | |
| "B" Business Unit | | | | | | |
| "C" Business Unit | | | | | | |
| "D" Business Unit | | | | | | |
| "E" Business Unit | | | | | | |
| "F" Business Unit | | | | | | |
| "G" Business Unit | | | | | | |
| "H" Business Unit | | | | | | |
| " I " Business Unit | | | | | | |
| "J" Business Unit | | | | | | |
| "K" Business Unit | | | | | | |
| ... | | | | | | |
| total | | | | | | |

**European Patent Office**

**DECLARATION**

Application Number

which under Rule 45 of the European Patent Convention shall be considered, for the purposes of subsequent proceedings, as the European search report

EP 02 02 6692

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also

Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---
-----

| Place of search | Date | Examiner |
|---|---|---|
| THE HAGUE | 26 March 2003 | Falierou, C |